# EUROPEAN PATENT SPECIFICATION

(11) **EP 4 180 262 B1**
(45) Date of publication and mention of the grant of the patent: **09.09.2026**
(21) Application number: 21208140.0
(22) Date of filing: 15.11.2021
(51) Int. Cl.: B60L 50/60, H01M 50/204, H01M 50/258, B60L 53/80

(54) **EXCHANGEABLE SPLIT PROFILE BATTERY CELL CARRIER**
AUSTAUSCHBARER BATTERIEZELLENTRÄGER MIT GETEILTEM PROFIL
SUPPORT DE CELLULE DE BATTERIE ÉCHANGEABLE À PROFIL DIVISÉ

(43) Date of publication of application: 17.05.2023
(73) Proprietor: Samsung SDI Co., Ltd., Yongin-si, Gyeonggi-do 17084 (KR)
(72) Inventor: Pucher, Matthias, 8403 Lebring (AT)
(74) Representative: Gulde & Partner

(56) References cited:
- KR-A- 20210 123 585
- US-A1- 2018 337 377
- US-A1- 2019 267 682
- US-A1- 2019 312 247

## Description

### Field of the Invention

The present invention relates to a frame that provides structural support for a battery pack having at least two rows of stacked battery cells, and in particular to a frame that, when used in a battery pack, allows for an easy exchange of an individual row of stacked battery cells. The invention further relates to a battery pack with at least two rows of stacked battery cells and to a vehicle using a power source comprising such a battery pack. The invention is also related to a method of assembling trays of stacked battery cells.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle additionally powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e. g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction. In the following, the carrier framework for a battery pack is also simply referred to as "frame."

Battery systems according to the prior art, despite any modular structure, usually comprise a battery housing that serves as enclosure to seal the battery system against the environment and provides structural protection of the battery system's components. Housed battery systems are usually mounted as a whole into their application environment, e. g. an electric vehicle. Thus, the replacement of defect system parts, e. g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e. g. in the mechanic's workshop, of the bulky battery systems becomes difficult.

US 2019/0312247 A1 relates to a battery arrangement for an electrified vehicle. In particular, the battery arrangement includes modules which are configured to move relative to one another in a transverse direction.

To provide thermal control of the battery pack, a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/ dissipating heat from the cells is required.

Typical battery housing concepts and/or frame concepts often employ a certain number of aluminum extrusion profiles, which are used as longitudinal-beams and cross-beams in order to achieve a rigid mechanical structure. Those parts are often used as well for the main support and also for cooling of the battery cells. Due to constant pressure to reduce overall costs and package space, it is common to integrate the battery cells as a so called "battery cell stack" directly between the "beams" such as aluminum extrusion profiles. Thereby, the battery cells themselves are mostly joined to the beams (carriers, profiles) via structural adhesive material.

Irrespective of whether the above-sketched stack-arrangements (battery cell stacks) are separated by using one, two, or more beams, it is always a compromise (trade-off) in terms of amount of required parts, manufacture costs, package, safety, and the possibility of a rework.

It is thus an object of the present invention to overcome or reduce at least some of the drawbacks of the prior art and to provide a battery pack and a frame for a battery pack, wherein at least two of the above-mentioned characteristics (i. e., amount of required parts, manufacture costs, package, safety, and the possibility of a rework) are improved, in comparison to the prior art, at the same time.

Specifically, embodiments of the present invention have at least the following advantages:
- use of two cost effective, very simple types of extrusion profiles (sub-beams), which are easy to manufacture;
- reduction of the risk of a thermal propagation between two battery cell stacks at the same package space;
- cooling means (as part of the thermal management system; see above) may be implemented within the beams;
- rigid connection between two sub-beams such that the connected sub-beams can be considered as one single profile (beam);
- allows for a total exchange of a battery cell stack, even in case the battery cells are glued/adhered directly to the profiles;
- very flexible and in particular allowing the combination of different types of beams (profiles), e. g., beams especially adapted as a front- and/or rear end beam (e. g., equipped with interfaces, sealing flange, or the like) can be installed.

With the present invention, it becomes in particular possible to design a very cost-effective battery concept / frame concept with higher safety performance at the same package space. Further, in case a failure occurs within a battery cell stack, it is possible to exchange the affected stack, even the cells are glued to the beams (profiles).

### Summary of Invention

Embodiments of the present disclosure seek to solve at least one of the problems existing in the prior art to at least some extent. In particular, a first aspect of the invention is related to a frame for providing structural support for a battery pack having at least two rows of stacked battery cells. The frame comprises: a first end beam, a second end beam, and one or more intermediate beams. The beams are preferably arranged in parallel on a virtual plane. The one or more intermediate beams are arranged between the first end beam and the second end beam, and each of the beams is orientated along a first direction. Each of the beams comprises: a first plate having a first side and a second side opposite to the first side of the first plate, a second plate having a first side and a second side opposite to the first side of the second plate, and a coupling means slidably coupling the second side of the first plate to the second side of the second plate such that any displacement of the first plate relative to the second plate is inhibited except for shifting the first plate relative to the second plate in or against the predefined direction.

Note that for one assembled beam (i. e., a beam with the respective first and second plate being coupled), the inner sides of the plates are labelled as the second sides, the outer sides labelled as the first sides.

To briefly summarize, the invention provides a split-profile concept, where is no longer quite a big compromise or trade-off between the characteristics mentioned in the foregoing chapter (i. e., the amount of required parts, manufacture costs, package, safety, and the possibility of a rework).

The expression "structural support" in particular means providing mechanical support such that a supported member (e. g., the rows of battery stacks and/or each individual battery cell) are held in an essentially fixated geometrical position relative to each other. Here, "essentially" means that small changes in the geometry due to normal temperature changes or changing mechanical loads exerting from outside onto the frame may remain possible.

The term "row of stacked battery cells" shall denote to a row of battery cells, preferably battery cells of identical shape, which are aligned, along a certain direction, one after the other or one on top the other so as to form one or more battery cell stacks. If the row of stacked battery cells only comprises a single stack, then the row of stacked battery cells is identical with the stack. However, the row may alternatively comprise more than one battery cell stack: in those cases, the battery cell stacks themselves are stacked together in a direction perpendicular to the direction of the cell stacking in each of the individual cell stacks. Then the stack of battery cell stacks forms the "row of stacked battery cell stacks," wherein the orientation of the cell stacking is defined as the orientation of the cell stacking in each of the individual cell stacks (which are oriented in parallel relative to each other in such a row).

Usually, the individual battery cells have a prismatic shape, i. e., the body of the cell extends between two parallel bases (a ground base and a top base), the two bases being identically shaped, e. g., as a polygon or as a circle or an ellipse. Then, the cells may be stacked simply by taking one of the cells and putting the ground base of any further cell on the top base of the precedent cell. Normally, the battery cells are each shaped as a right prism, i. e., a prism with the side face being perpendicular to each of the bases. In a battery pack, more than one row of stacked battery cells may be used.

In one embodiment of the frame according to the invention, wherein the coupling means of each of the beams comprises: a first guiding means comprising one or more first guide rails; and a second guiding means comprising one or more second guide rails. Each of the first guide rails is fixedly arranged on the surface of the second side of the respective first plate and extending linearly along the predefined direction. Each of the second guide rails is fixedly arranged on the surface of the second side of the respective second plate and extending linearly along the predefined direction. At least one of the first guide rails and at least one of the second guide rails are engaged with each other.

Preferably, for each of the coupling means, the number of first guide rails corresponds to the number of second guide rails. In such embodiments, each of the first guide rails on the respective first plate may be engaged with a matching one of the second guide rails. In some situations, however, the number of guide rails provided on the first plate of a beam may be different from the number of guide rails provided on the second plate of that beam: for example, different prefabricated plates may be used together, and there may be a first type of pairs of first and second plates each having two guide rails and a further type of pairs of first and second plates each having only one guide rail, but the positions of the guide rails on the plates are chosen such that nonetheless, e. g., the first plate of the first type is connectable to the second plate of the second type in that only one of the guide rails of the first plate becomes engaged with the single guide rail on the second plate. In the latter example, the other guide rail of the first plate would remain unused. Preferably, for each of the coupling means, the number of the first guide rails is at least two and the number of the second guide rails is at least two.

Each of the guide rails may be formed integrally (i. e., as one piece of material) with the respective plate on which the guide rail is arranged. Then, the plate together with the coupling means arranged thereon may be manufactured by extrusion. The material of some or each of the plates may be aluminum (Al). Then, some or each of the plates may be manufactured as aluminum extrusion profiles.

In one embodiment of the frame, at least one pair of a first guide rail and a second guide rail being engaged has the following properties: The first guide rail exhibits a first cross-sectional profile in any plane perpendicular to predefined direction and intersecting the first guide rail, independent from the position of said plane with respect to the predefined direction. The second guide rail exhibits a second cross-sectional profile in any plane perpendicular to the predefined direction and intersecting the second guiding means, independent from the position of said plane with respect to the predefined direction. Further, either the shape of the first cross-sectional profile comprises a cavity with an opening and the second cross-sectional profile comprises a bulge fitting into the cavity, wherein the bulge is connected to the remaining second cross-section profile by a connection part passing through the opening of the cavity, and wherein the bulge may have a size being too large to be passed through the opening of the cavity, or the shape of the second cross-sectional profile comprises a cavity with an opening and the first cross-sectional profile comprises a bulge fitting into the cavity, wherein the bulge is connected to the remaining first cross-section profile by a connection part passing through the opening of the cavity, and wherein the bulge may have a size being too large to be passed through the opening of the cavity.

In one embodiment of the frame, the coupling means of at least one of the beams comprises at least one pair of a first guide rail and a second guide rail, wherein the first guide rail and the second guide rail are engaged with each other using a dovetail joint.

In one embodiment of the frame, for each beam, one or more cooling channels are arranged on the surface of the second side of the respective first plate. In one embodiment of the frame, for each beam, one or more cooling channels are arranged on the surface of the second side of the respective second plate. The cooling channels may be formed integrally with the respective plates, on which they are arranged. In preferred embodiments, the each of cooling channels extend linearly along the predefined direction. Then, some or each of the plates together with the respective coupling means and cooling channels can be manufactured by extrusion.

In one embodiment of the frame, for each of the intermediate beams, the first side of the respective first plate is adapted to provide support for a lateral side of a row of stacked battery cells and the first side of the respective second plate is adapted to provide support for a lateral side of a further row of stacked battery cells. For the first end beam, the first side of the respective second plate is adapted to provide support for a lateral side of a row of stacked battery cells. For the second end beam, the first side of the respective first plate is adapted to provide support for a lateral side of a row of stacked battery cells.

In this context, the term "lateral side" of a row of stacked battery cells shall denote a side of the row, which extends parallel to the direction, in which the battery cells are stacked to form the row of stacked battery cells. Accordingly, the side face(s) of a row of stacked battery cells depends on the given shape of the battery cells stacked together to form the row of stacked battery cells. For example, if the individual battery cells each exhibit a cuboidal shape, the four side faces of the row of stacked battery cells each have a rectangular planer shape. In this case, the first sides of plates adapted to provide support for a lateral side of a row of stacked battery cells may likewise exhibit a planar rectangular shape or a planer trapezoidal shape. However, if some side faces of the battery cells have a convex shape (e. g, if the cross-section of the cells resembles two lying letters "U" with their open sides put together), the first sides of plates adapted to provide support for a lateral side of a row of stacked battery cells may have a complementary concave shape.

In one embodiment of the frame, for each of the intermediate beams, the first side of the respective first plate is adapted to provide support for each of a lateral side of a first row and a second row of stacked battery cells and the first side of the respective second plate is adapted to provide support for each of a lateral side of the second row and a third row of stacked battery cells; wherein for the first end beam, the first side of the respective second plate is adapted to provide support for a lateral side of the first row of stacked battery cells; and wherein for the second end beam, the first side of the respective first plate is adapted to provide support for a lateral side of the third row of stacked battery cells.

In embodiments of the frame, the support provided for lateral sides of a row of stacked battery cells by a first side of a plate may be realized by at least one flange. Preferably, the number of flanges arranged on that first side is two. In the latter case, the flanges may be arranged on either edge of the first side along the predefined direction. Also, the two flanges may have a distance two each other which encompasses a lateral side of a row of stacked battery cells.

In one embodiment of the frame, for each of the beams, the surface of the second side of the first plate has an essentially trapezoidal shape extending between two parallel edges each being orientated along the predefined direction. Further, for each of the beams, the surface of the second side of the second plate has an essentially trapezoidal shape extending between two parallel edges each being orientated along the predefined direction. The trapezoidal shape may be in particular a rectangular shape. However, for example to facilitate a mounting of the beams to front and rear bars oriented perpendicular to the predefined direction and configured to hold each of the first end beam, the second end beam and the intermediate beams in a predefined positions (see below), the rectangular shape of the plates may be prolonged at their respective ends in or against the predefined direction so as to form mounting areas or the like, which may result in an essentially trapezoidal shape.

In one embodiment of the frame, for the first end beam, the first side of the respective first plate may be adapted for being mounted to predefined external structures. In one embodiment of the frame, for the second end beam, the first side of the respective second plate may be adapted for being mounted to predefined external structures. The predefined external structures may be, for example, parts of a housing configured to accommodate the frame or parts of a rack configured to store several battery packs using the frame according to the invention.

In one embodiment, the frame further comprises: a front bar, wherein the front bar is oriented perpendicular to the predefined direction and configured to be mechanically connected to each of the respective proximal ends of the first end beam, the second end beam and each of the intermediate beams, when viewed in the predefined direction. In one embodiment, the frame further comprises a rear bar, wherein the rear bar is oriented perpendicular to the predefined direction and configured to be mechanically connected to each of the respective distal ends of the first end beam, the second end beam and each of the intermediate beams, when viewed in the predefined direction. Here, the "proximal end" of the first end beam, the second end beam and each of the intermediate beams shall denote this end of the respective beam, which points into a direction opposite to (i. e, against) the predefined direction. Also, the "distal end" of the first end beam, the second end beam and each of the intermediate beams shall denote this end of the respective beam, which points into the predefined direction. The front and/or the rear bar allow for holding each of the first end beam, the second end beam and the intermediate beams in respective predefined positions. When using the front bar and the rear bar together in one frame, the front bar and the rear bar may be arranged parallel to each other.

The mounting of any one of first end beam, the second end beam and each of the intermediate beams to the front bar may be performed using a connection (for example, a screw joint or bolted connection) between the front bar and the respective first plate and/or the respective second plate. The mounting of any one of first end beam, the second end beam and each of the intermediate beams to the rear bar may be performed using a connection (for example, a screw joint or bolted connection) between the rear bar and the respective first plate and/or the respective second plate.

In embodiments of the frame, mechanical structures such as holes for accommodating screws or bolts may be formed in at least some of the plates to facilitate the connecting procedure between a beam and a bar. Preferably, each of these mechanical structures may be arranged on the surface of a second side of the respective plate, on which it is arranged. Each or of these mechanical structures may be formed integrally with the respective plates, onto which it is arranged. In embodiments, these mechanical structures may be realized by through-hole channels linearly extending along the predefined direction may be formed integrally with at least some of the plates. In embodiments, plates comprising those through-hole channels may be manufactured by extrusion techniques.

In embodiments of the frame, the first end beam, the second end beam and each of the intermediate beams may be mounted in the following manner to the front beam and/or the rear beam: The first side of the second plate of the first end beam faces the adjacent intermediate beam. The first side of the first plate of the intermediate beam adjacent to the first end beam faces the first end beam. The first side of the first plate of each intermediate beam faces the first side of the second plate of an adjacent beam being oriented in parallel to that intermediate beam. The first side of the second plate of each intermediate beam faces the first side of the first plate of an adjacent beam oriented in parallel to that intermediate beam. Finally, the first side of the first plate of the second end beam faces the first side of the second plate of the adjacent intermediate beam. In the above, the expression "faces" shall just consider the members of the frame, independent from whether or not rows of stacked battery cells are mounted into the frame.

A second aspect of the present invention refers to a battery pack. The battery pack according to the invention comprises at least two rows of stacked battery cells and the frame according to the first aspect of the invention. The number of intermediate beams equals the number of rows of stacked battery cells reduced by one. Each of the rows of stacked battery cells is mounted between a pair of adjacent beams. Here, the expression "beam" refers to any one of the first end beam, the second end beam, and the intermediate beams. The expression of a "row of stacked battery cells being mounted between a pair of adjacent beams means" shall denote in particular that the row of stacked battery cells is held in place by the any one of the adjacent beams. This may be performed simply by mechanical structures (e. g., using flanges as described above in the context of certain embodiments) or by other methods (see below).

In one embodiment of the battery pack according to the invention, the rows of stacked battery cells are each mounted to the respective adjacent beams using adhesives.

A third aspect of the present invention refers to a vehicle using a power source comprising the battery pack according to the second aspect of the invention.

A fourth aspect of the invention refers to a method of assembling trays of stacked battery cells for use in a battery pack. The method comprising the following steps:
a1) providing at least two rows of stacked battery cells;
a2) providing a first and second plate of a first end beam;
a3) providing a first and second plate of a second end beam;
a4) providing a number of first plates of an intermediate beam and a number of second plates of an intermediate beam, wherein the number of first plates of an intermediate beam and the number of second plates of an intermediate beam are equal to each other and equal to the of rows of stacked battery cells reduced by one. Here, each of the plates has a first side and a second side. The first and second plate of the first end beam are configured for being coupled, with their respective second sides, to form the first end beam, wherein the coupling inhibits any displacement of the respective first plate relative to the respective second plate except for shifting the respective first plate relative to the respective second plate in or against the direction of the first end beam. The first and second plate of the second end beam are configured for being coupled, with their respective second sides, to form the second end beam, wherein the coupling inhibits any displacement of the respective first plate relative to the respective second plate except for shifting the respective first plate relative to the respective second plate in or against the direction of the second end beam. Each of the first plates of an intermediate beam is configured for being coupled with each of the second plates of an intermediate beam to form an intermediate beam, wherein the second side of the respective first plate is coupled to the second side of the respective second plate, and wherein the coupling inhibits any displacement of the respective first plate relative to the respective second plate except for shifting the respective first plate relative to the respective second plate in or against the direction of the intermediate beam formed by the respective first and second plate.

The method further comprises the following steps of:
b) creating a first end tray by mounting one of the rows of stacked battery cells between the first side of the second plate of the first end beam and the first side of the first plate of an intermediate beam;
c) creating a second end tray by mounting a further one of the rows of stacked battery cells between the first side of the second plate of an intermediate beam and the first side of the first plate of the second end beam;
d) if the number of rows of stacked battery cells is larger than two:
   creating, for each of the remaining rows of stacked battery cells, an intermediate tray by mounting each of the rows of stacked battery cells, except for the rows of stacked battery cells already having been mounted in steps b) and c), between the first side of the second plate of an intermediate beam and the first side of a first plate of a further intermediate beam.

Yet a further aspect of the invention is related to a method for assembling a battery pack with a frame according to the first aspect of the invention. The method comprises:
e) generating trays of stacked battery cells using the method according to the fourth aspect of the invention;
f) assembling the first end beam by coupling the second side of the first plate of the first end beam with the second side of the second plate of the first end beam;
g) assembling the second end beam by coupling the second side of the first plate of the second end beam with the second side of the second plate of the second end beam;
h) if the number of rows of stacked battery cells equals two:
   connecting the first end tray with the second end tray by assembling the only intermediate beam by coupling the respective second sides of the first and second plate of the intermediate beam;
i) if the number of rows of stacked battery cells is larger than two:
   performing the following sub-steps of:
   i1) connecting the first end tray with an intermediate tray by assembling an intermediate beam by coupling the second side of the uncoupled second plate of the intermediate beam used in the first tray with the second side of the first plate used in one of the intermediate trays;
   i2) if there is a further unconnected intermediate tray: connecting the further unconnected tray by assembling an intermediate beam by coupling the second side of the uncoupled first plate of an intermediate beam used in the intermediate tray connected in the foregoing step to the second side of the second plate of an intermediate beam used in the further intermediate tray;
   i3) repeating step i2) until there is no further unconnected intermediate tray;
   i4) connecting the second end tray by assembling an intermediate beam by coupling the second side of the uncoupled first plate of an intermediate beam used in the intermediate tray, which has been connected last in the foregoing sub-step i1) or i2), to the second side of the second plate of the intermediate beam used in the second end tray.

At least some of the above-described embodiments of the invention provide, i. a., the following advantages:
- Decomposability: The trend in the art is that battery cells are glued directly to the cell frame (no more modules) and the pack can therefore no longer be decomposed. However, with the invention, a row of stacked battery cells with two "profile halves" (plates) each to the left and right of the battery cells can be pulled out of the battery pack from the side.
- Safety: Since there is only a minimum of material connection between the two "profile halves" (first and second plates), the heat transfer reduces significantly. Consequently, thermal propagation between adjacent cell rows is largely prevented.
- Identical parts: In each profile (beam), the "profile halves" (plates) facing the battery cells may always be the same kind of component. The remaining "profile half" is then selected depending on the installation location, i. e., either an "outer half" for establishing an exterior side of the total battery pack or an "inner half" facing the battery cells, if the beam is arranged between two rows of stacked battery cells.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic cross-sectional through an intermediate beam to be used in a frame according to one embodiment of the invention;
- Fig. 2: schematically illustrates three perspective views on a first plate and a second plate to be assembled into an intermediate beam to be used with embodiments of the invention;
- Fig. 3: provides an enlarged view of a cut-out of Fig. 1 and a sketch of a dovetail joint;
- Fig. 4: schematically illustrates different types of plates to be used in embodiments of the frame according to the invention;
- Fig. 5: schematically illustrates different types of beams using combinations of the plates shown in Fig. 4;
- Fig. 6: schematically illustrates an embodiment of a battery pack according to the invention;
- Fig. 7: schematically illustrates a split beam concept underlying the invention with the help of the example of a battery pack shown in Fig. 6;
- Fig. 8: schematically illustrates another embodiment of a battery pack according to the invention;
- Fig. 9: schematically illustrates the heat insulation provided by a beam to be used with embodiments of the frame according to the invention;
- Fig. 10: schematically illustrates adhesive layers used to glue battery cells to a beam used with embodiments of the frame according to the invention;
- Fig. 11: schematically shows an example of a coupling means that can be employed in embodiments of the present invention;
- Fig. 12: schematically shows a further example of a coupling means that can be employed in embodiments of the present invention; and
- Fig. 13: schematically shows yet an alternative example of a coupling means that can be employed in embodiments of the present invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

The terminology used herein is for the purpose of describing particular embodiments only and is not intended to be limiting of the present invention. As used herein, the singular forms "a," "an," and "the" are intended to include the plural forms as well, unless the context clearly indicates otherwise. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

In the following, the terms "upper" and "lower" are defined with respect to the orientation of the illustrated subject-matter in the figures. If a Cartesian coordinate system is shown in a figure, the terms "upper" and "lower" are defined with respect to the x-axis of the coordinate system. For example, the upper cover is positioned at the upper part of the x-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e. g., rotated 90 degrees or at other orientations) and the spatially relative descriptors used herein should be interpreted accordingly.

Features of the inventive concept and methods of accomplishing the same may be understood more readily by reference to the following detailed description of embodiments and the accompanying drawings. Hereinafter, example embodiments will be described in more detail with reference to the accompanying drawings. The present invention, however, may be embodied in various different forms, and should not be construed as being limited to only the illustrated embodiments herein. Rather, these embodiments are provided as examples so that this disclosure will be thorough and complete and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5 % of the value centered on the value.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

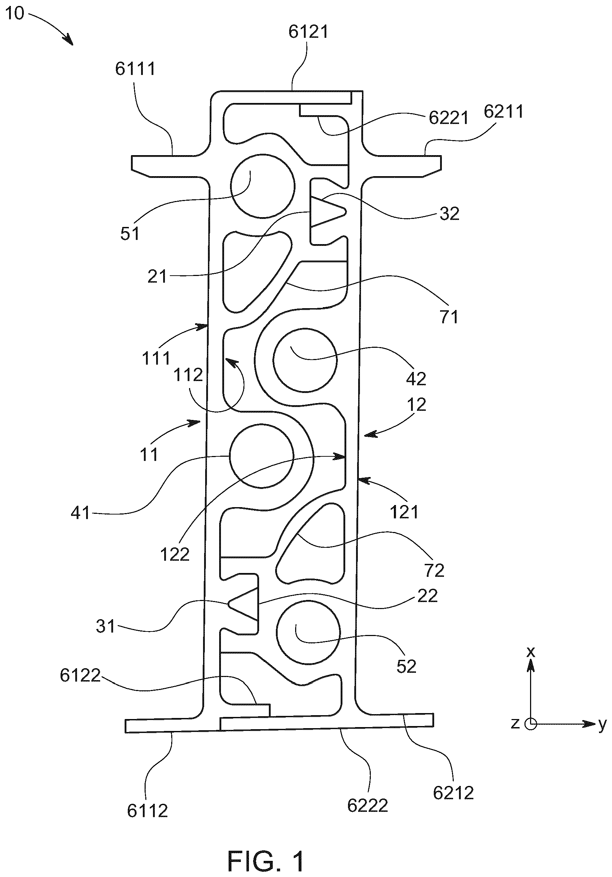

Figure 1 is a schematic cross-sectional through an intermediate beam 10 to be used in a frame according to one embodiment of the invention. The intermediate beam 10 comprises a first plate 11 (on the left side in the figure) and a second plate 12 (on the right side in the figure). Both plates 11, 12 have an essentially rectangular shape extending perpendicular to the drawing plane of the figure. In the following, those sides of the plates, which form the exterior of the intermediate beam 10, will be termed the "first sides" of the respective plates, and correspondingly, these sides of the first and second plate, which face each other, will be termed the "second sides" of the respective plates. That is to say, in the figure, the left side of the first plate 11 is the first side 111 of first plate 11, and the right side of the first plate 11 is the second side 112 of first plate 11. Similarly, the right side of second plate 12 is the first side 121 of second plate 12, and the left side of second plate 12 is the second side 122 of second plate 12.

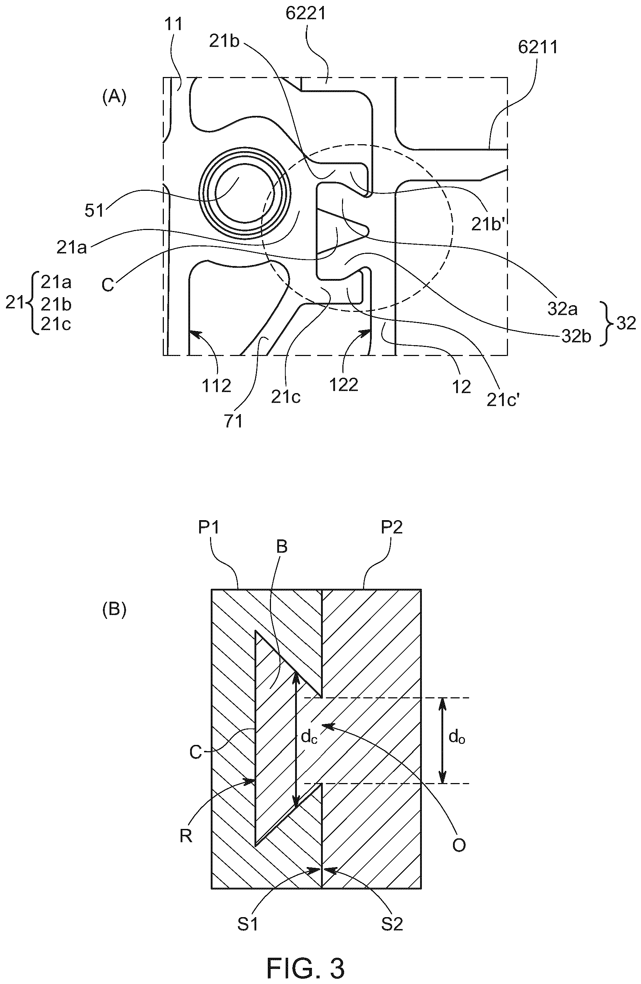

The first plate 11 and the second plate 12 are coupled to each other by a coupling means, which, in the shown example, is built by two pairs of guide rails, each of the pairs of guide rails establishing a connection realized by a so-called dovetail joint. A dovetail joint establishes a connection by engaging a linearly extending groove (as one guide rail) with a likewise linearly extending tongue (as a further guide rail). This is explained in more detail below in the context of Figure 3, in particular with regard to the shape of the guide rails. In the example, an upper dovetail joint is realized by groove 21 and tongue 32 (the tongue 32 being split into a V-like shape), which are both extending linearly in a direction perpendicular to the drawing plane of the figure. Thereby, groove 21 is arranged on the second side 112 of first plate 11 and the matching tongue 32 is arranged at the opposite position to groove 21 on the second side 122 of second plate 12. A lower dovetail joint has in principal a like structure, however, in a reversed order with respect to the plates, i. e., its groove 22 is arranged on the second side 122 of second plate 12, and its tongue 31 is arranged on the second side 112 of first plate 11.

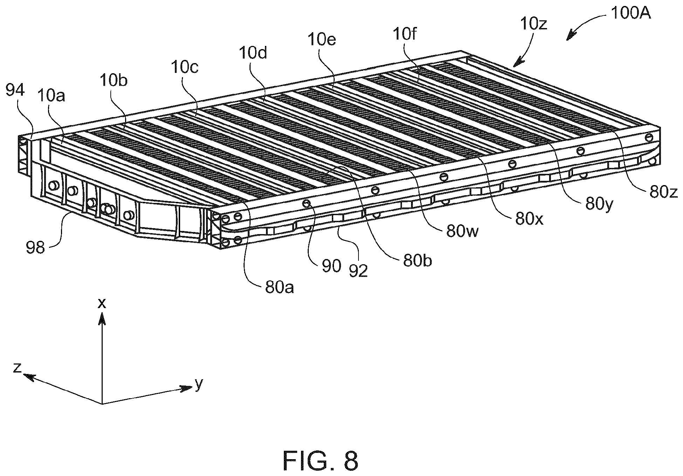

As to the groove 21 it shall be remarked that it is not directly arranged on the second side of plate 11 but fixated to a structure formed by a circumferential wall of a through-hole 51 together with a reinforcing strut 71, wherein both, the circumferential wall of through-hole 51 and the reinforcing strut 71, are arranged directly on the second side of plate 11. Likewise, groove 22 is not directly arranged on the second side of plate 12 but fixated to a structure formed by a circumferential wall of a through-hole 52 together with a reinforcing strut 72, wherein both, the circumferential wall of through-hole 52 and the reinforcing strut 72, are arranged directly on the second side of plate 12. Through-holes 51, 52 are adapted to accommodate screws or bolts used for fixating the intermediate beam 10 to a front bar 92 or a rear bar 94, as explained in more detail below in the context of Fig. 8.

Also arranged on the respective second sides 112, 122 of plates 11, 12 are first and second cooling channels 41, 42, respectively. The cooling channels 41, 42 are arranged directly on the respective plates 11, 12 such that-when a battery pack using the illustrated intermediate beam 10 is in use-battery cells mounted adjacent to the first sides 111, 121 of plates 11, 12 are separated from coolant fluids flowing through cooling channels 41, 42 only by the relatively thin material layer of first plate 11 and second plate 12, respectively. This way, the maximum of exchange between the battery cells and the coolant fluids is achieved, i. e., a maximum cooling effect is acquired. In the example of an intermediate beam 10 as shown in Fig. 1, the first cooling channel 41 is arranged on second side 112 of first plate 11 is positioned upwardly displaced with respective position of second cooling channel 42 arranged and second side 122 of second plate 12. The reason is that each of cooling channels 41, 42 need, in a horizontal direction (y), more space than the half of the distance between the first and second plate 11, 12. In a vertical direction (x), the exterior surfaces of the circumferential walls of cooling channels 41, 42 may come close to each other, but preferably, they do not come into contact with each other.

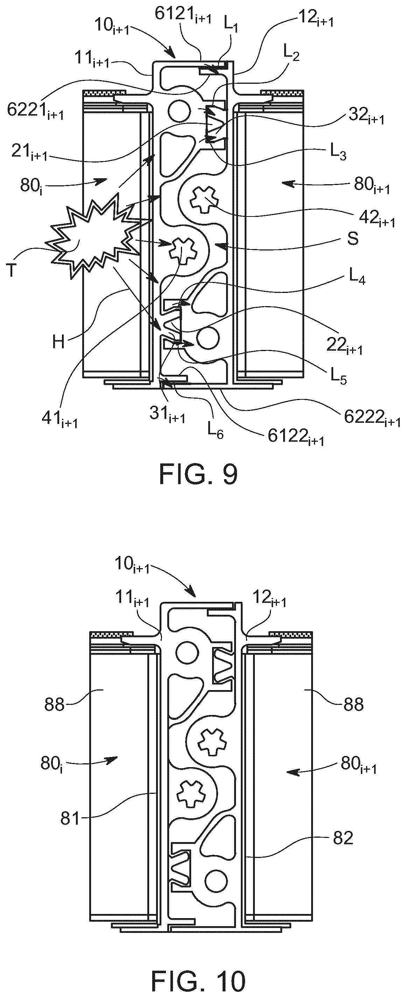

The remaining space between the first and second plate 11, 12 is left void, i. e., there are no further solid structures provided in this space. However, the space between the first and second plate 11, 12 may be filled with a gas such as air. This has the effect minimizing the heat exchange between first plate 11 and the second plates 12. This will be discussed in more detail below in the context of Fig. 9.

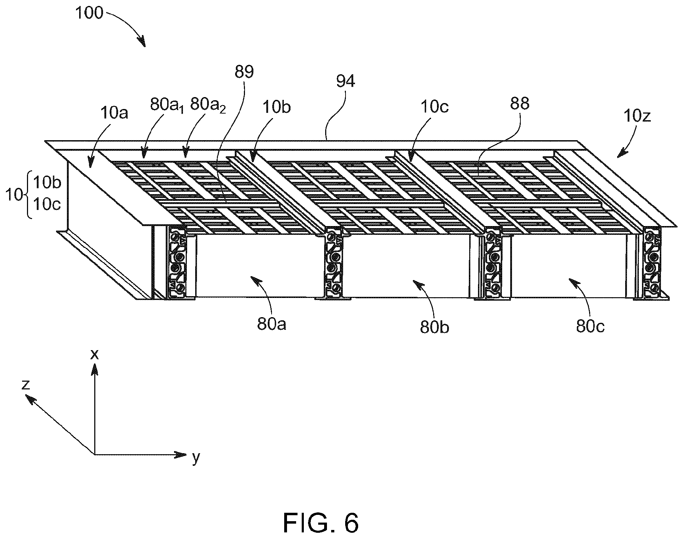

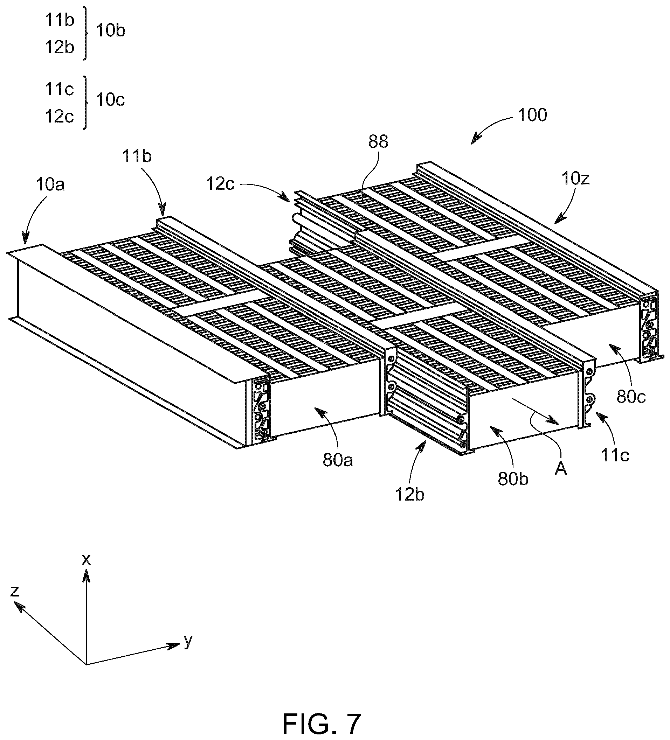

The outer sides of intermediate beam 10 illustrated in Fig. 1 (i. e., first side 111 of first plate 11 and second side 121 the second plate 12) are each adapted to provide direct mechanical support to a row of stacked battery cells (e. g., see Figs. 6 and 7). To that end, a first outer pair of flanges 6111, 6112 protrudes from the first side 111 of first plate 11, and similarly, a second outer pair of flanges 6211, 6212 protrudes from the first side 121 of second plate 12. The first outer pair of flanges protruding from the first side 111 of first plate 11 comprises an upper outer flange 6111 arranged close to the upper edge of first plate 11 and a lower outer flange 6112 arranged at the lower edge of first plate 11. Correspondingly, the second outer pair of flanges protruding from the first side 121 of second plate 12 comprises an upper outer flange 6211 arranged close to the upper edge of second plate 12 and a lower outer flange 6212 arranged at the lower edge of second plate 12. Each of the outer flanges 6111, 6112, 6211, 6212 extends linearly in a direction perpendicular to the drawing plane of figure over the length of the respective plate, on which the flange is arranged. Then, a right lateral side of a row of stacked battery cells can be fitted between the first outer pair of flanges 6111, 6112. Likewise, a left lateral side of a row of stacked battery cells can be fitted between the second outer pair of flanges 6211, 6212. Then, the lateral sides of the rows of stacked battery cells put adjacent to the respective first sides 111, 121 of first and second plates 11, 12 are held in place by the outer flanges 6111, 6112, 6211, 6212 in a vertical direction (x) with respect to the orientation depicted in Fig. 1.

To close the space between the first and second plate 11, 12 also in a vertical direction, pairs of inner flanges are also arranged on plates 11, 12, respectively. Specifically, an upper inner flange 6121 protruding from the upper edge of the second side 112 of first plate 11 reaches to the upper edge of the second side 122 of second plate 12. The upper inner flange 6121 is supported, from below, by a further upper inner flange 6221 protruding from the second side 122 of second plate 12 from a position close to the upper edge of second plate 12. In a similar manner, a lower inner flange 6222 protruding from the lower edge of the second side 122 of second plates 12 reaches to the lower edge of the second side 112 first plate 11. The lower inner flange 6222 is supported, from above, by a further lower inner flange 6122 protruding from the second side 112 of first plate 11 from a position close to the lower edge of first plate 11. Each of the inner flanges 6121, 6122, 6221, 6222 extends linearly in a direction perpendicular to the drawing plane of figure over the length of the respective plate, on which the flange is arranged.

Preferably, the cross-sectional profile of each of plates 11, 12 as shown in Fig. 1 together with their respective structures arranged thereon (see above) remains constant over the whole extension of the plates 11, 12 in the direction perpendicular to the drawing plane of the figure. Then, each of these plates 11, 12 may be manufactured by extrusion techniques. For example, each of plates 11, 12 may be an aluminum extrusion profile.

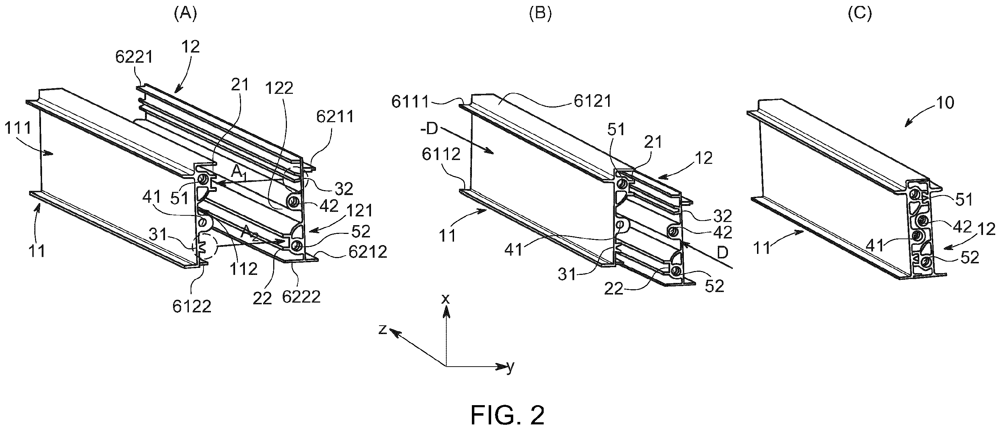

Note that although the above-described structures arranged on the second side 112 of first plate 11 may, in a horizontal direction, overlap with structures arranged on the second side 122 of second plate 12 or even touch structures arranged on the second side 122 of second plate 12 (as in case, e. g., of the upper inner flanges 6121, 6221 or the lower inner flanges 6122, 6222), the structures arranged on the first plate 11 are not fixedly connected to any one of the structures arranged on the second plates 12. The reason is, that the first plate 11 and the second plates 12, with each of their respective structures, must remain displaceable relative to each other in a direction perpendicular (z) to the drawing plane of Fig. 1. This will be described in more detail below in the context of the following Fig. 2.

Figure 2 schematically provides three perspective views on a first plate 11 and a second plate 12 to be assembled into an intermediate beam 10. The Cartesian coordinate system with the axes x, y, z also depicted in Fig. 2 applies to any one of these views. In the three perspective views illustrated by Fig. 2A, Fig. 2B, and Fig. 2C, the first plate 11 and the second plates 12 are shown in different positions relative to each other. The three views could also be interpreted as different states of a process of assembling the intermediate beam 10 as shown in the view of Fig. 2C. A cross-sectional cut through the assembled intermediate beam 10 as depicted in Fig. 2C would correspond to the view as presented in Fig. 1.

In each of the tree perspective views, either of the plates 11, 12 extends parallel to the x-z-plane of the coordinate system. Both plates 11, 12 are elongate in the z-direction. The linear extension along the z-direction of the structures arranged on the plates 11, 12 and described above with respect to Fig. 1 it is clearly visible at least for the first outer pair of flanges 6111, 6112 protruding from the first side 111 of first plate 11, the inner flanges 6221, 6222 protruding from the second side 122 of second plate 12, the through-hole 52 of second plate 12, the cooling channel 42 of second plate 12, as well as for tongue 32 of the upper dovetail joint and groove 22 of the lower dovetail joint.

Fig. 2A shows the first plate 11 vis-à-vis to the second plate 12 such that the respective second sides 112, 122 are orientated in parallel and face each other. Highlighted by dashed circles are the (lower) tongue 31 arranged on the second side 112 of first plate 11 and protruding to the right as well as the (upper) tongue 32 arranged on the second side 122 of second plate 12 and protruding to the left. At respective positions (with respect to the x-z-plane of the coordinate system) on the respective opposite plane are arranged the (lower) groove 22 on the second side 122 of second plate 12 and the (upper) groove 22 on the second side 112 of first plate 11. In a state, wherein the plates 11, 12 our coupled to each other so as to form the intermediate beam 10 shown in Fig. 2C, the upper tongue 32 on the second plate 12 is embraced by the upper groove 21 on the first plate 11 and thus establish a coupling of the two plates 11, 12 to each other in the upper halves of the plates 11, 12. The assignment of upper tongue 32 to upper groove 21 is indicated by the arrow based on the dashed circle around upper tongue 32 and pointing to upper groove 21. Likewise, the pair of lower tongue 31 and lower groove 22 establishes a coupling of the two plates 11, 12 to each other in the lower halves of the plates 11, 12, when the lower tongue 31 is embraced by the lower groove 22 as shown in Fig. 2C. In Fig. 2A, the assignment of lower tongue 31 two lower groove 22 is indicated by the arrow based on the dashed circle around lower tongue 31 and pointing to lower groove 22.

The details of the dovetail joints employed, in the illustrated example, as coupling means to connect the first and second plate 11, 12 to each other are described below with the help of Fig. 3. As it will become clear from the description as to Fig. 3, one feature of the employed dovetail joints is that any displacement of the first and second plates 11, 12 relative to each other with respect to the y-z-plane of the coordinate system becomes inhibited by the dovetail joints, while at the same time, movements of the first and second plates 11, 12 relative to each other with respect to the z-axis of the coordinate system are allowed. Likewise, it is not possible to establish a coupling by means of the dovetail joints by simply pressing the respective tongue into the respective groove. As a consequence, is also possible to connect the respective second sides 112, 122 of first and second plate 11, 12 by simply pressing them against each other in the direction of the x-axis of the coordinate system. Rather, the first and second plate 11, 12 can only be coupled by aligning the plates along the z-direction such that, when viewed in the z-direction, the cross-sectional profile of (upper) tongue 32 is embraced within the cross-sectional profile of (upper) groove 21, and similarly, the cross-sectional profile of (lower) tongue 32 is embraced within the cross-sectional profile of (lower) groove 21, as effectively shown in Fig. 1. (Note that from Fig. 1, it cannot be taken, whether the plates 11, 12 are in a couple state, or if they are in a decoupled state but aligned one after the other in a direction perpendicular to the drawing plane of Fig. 1.) Subsequently, the plates 11, 12 can be coupled to one another by moving the plates 11, 12 against each other parallel to the z-axis of the coordinate system, thereby telescoping the (upper) tongue 32 into the (upper) groove 21, and similarly, the (lower) tongue 32 into the (lower) groove 21. This is sketched in Fig. 2B, wherein the arrow D indicates that the second plate 12 is shifted into the z-direction and the arrow -D indicates that the first plate 11 is shifted against the z-direction. Note that during the whole process of telescoping the plates 11, 12 into each other (Fig. 2B), a view upon the ensemble of the first and second plate 11, 12 from a direction along the z-axis of the coordinate system would yield a constant picture, viz. the picture sketched in Fig. 1.

Finally, after having been completely telescoped into one another, the ensemble of the first and second plate 11, 12 has reached the state depicted in Fig. 2C, i. e., the state wherein the first and second plate 11, 12 after an assembled into the intermediate beam 10.

Fig. 2 can be summarized as follows: The first plate 11 and the second plate 12, which may each be realized by simple aluminum extrusion profiles, are adapted for being telescoped into each other by using established shapes for accurate (linear-)guiding such as the "dovetail guide" shown in the examples of Figs. 1 and 2. Once the first plate 11 and the second plate 12 are slipped into each other, the resulting beam 10 (Fig. 2C) can be considered, when employed in frame for a battery pack (see below), as a rigid single-piece profile (beam).

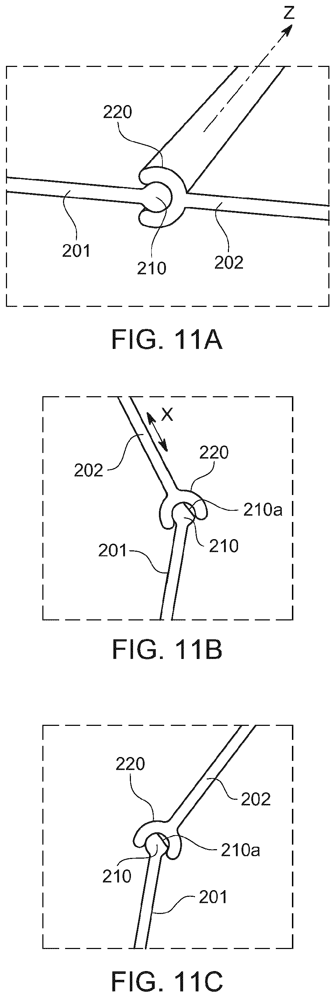

Although the illustrated examples of coupling means employ dovetail joints as explained above, it is emphasized that the present invention is not restricted to the use of dovetail joints. Any other joint inhibiting any movements between the plates assembled to a beam except for a longitudinal movement of the plates relative to each other can be likewise employed, as long as it provides for the required demands of stability. Other examples of joints that can be used as coupling means with the present invention are presented below with the help of Figs. 11, 12, and 13.

One preferred coupling mechanism, which may be employed to connect the respective second sides 112, 122 of the first plate 11 and the second plate 12, will now be described in detail with the help of Figure 3. In particular, Fig. 3A is an enlarged cut-out of an upper area of the intermediate beam 10 as depicted in Fig. 1 and focuses on the upper dovetail joint (highlighted by the dashed circle) as shown in Fig. 1 (see the description above). The general principle of a dovetail joint can be taken from the schematic sketch of that coupling mechanism provided by Fig. 3B. A first structure P1 and a second structure P2, which may be in touch by respective surfaces S1, S2 (wherein the touch may be reduced, however, to a minimum; see below), comprise matching features C, B being in engagement with each other. Specifically, the first structure P1 comprises a cave C with an opening O, and the second structure P2 comprises a bulge B protruding form-fittingly through the opening O into the cave C of the first structure P1. Specifically, the cave C is formed such that the space within the cave C becomes narrower when viewed from the rear end R of the cave C into the direction pointing to the opening O. That is to say, with respect to the orientation of figure, a diameter d_{C} of the cave C measured in the vertical direction gets smaller as the horizontal position of the measurement approaches the opening O arranged opposite to rear end R with respect to the position of the cave C. In other words, the hollow space of cave C exhibits a conical shape which tapers in the direction pointing from the rear end R to the opening O, i. e., the inner surface of cave C has a conical shape. Further, the bulge B arranged on the second structure P2 exhibits the same conical shape tapering in the direction pointing from the rear end R to the opening O, however, in an inverted manner, i. e., the outer surface of bulge B shows that conical shape. At its narrowest site, bulge B is connected to the second structure P2. Accordingly, the bulge B accommodated in the cave C cannot escape out of the cave C through the opening O, as at certain horizontal positions, the diameter of the bulge (being equal to the diameter d_{C} of cave C measured at the same horizontal position) is larger than the diameter d_{O} of the opening O. Thus, the first structure P1 and the second structure P2 are held in fixed positions relative to each other with respect to the two dimensions spanned by the drawing plane of figure by the engagement of cave C and bulge B. Due to the above-described tapered shape resembling a dovetail, the connection generated by cave C and bulge B is generally termed a dovetail joint.

In the present context, each of the first and second structure P1, P2 as well as of the cave C and the bulge B are elongate structures extending along the direction perpendicular to the drawing plane of figure such that the cross-sectional profile of the ensemble of the structures (as shown in Fig. 3B) remains constant for the cross-sectional profiles on any intersecting plane parallel to the drawing plane, as long as the intersecting claim intersects with the ensemble of these structures. As a consequence of this geometry, the first structure P1 and the second structure P2 can be moved relative to each other (i. e., the first and second structure P1, P2 are slidable or shiftable with respect to each other) in a direction perpendicular to the drawing plane of the figure, while at the same time-as described above-the first structure P1 and the second structure P2 remain in fixed positions relative to each other with respect to the drawing plane. This effect is exploited in the example of a coupling mechanism used in the intermediate beam 10 depicted in Fig. 1 as shown in detail in Fig. 3A. In spite of some minor structural variations in comparison to the connection illustrated in Fig. 3B, a coupling mechanism shown in Fig. 3A (in the area within the highlighting dashed circle) it is still a dovetail joint.

Specifically, as can be seen in the cross-sectional cut of (a part of) intermediate beam 10 as depicted in Fig. 3A, a ground part 21a and two walls 21b, 21c are formed so as to build a groove 21 extending along the direction perpendicular to the drawing plane. In the figure, the ground part 21a extends in the vertical direction, whereas each of the two walls 21b, 21c extend and horizontal direction. The groove 21 corresponds to the cave C in the sketch of Fig. 3B, wherein the opening is formed between the right edges of the two walls 21b, 21c. A conical part of the cave realized by groove 21 is built by end parts 21b', 21c' of the two walls 21b, 21c in that the end parts 21b', 21c' each have an inclined surface (inclined with respect to each other and also inclined to the horizontal direction of Fig. 3A) such that in the area of the end parts 21b', 21c', the hollow space in the groove 21 tapers in a direction pointing from the ground part 21a (corresponding to the rear end R in Fig. 3B) to the opening between the edges of the two walls 21b, 21c. As already described in the context of Fig. 1, groove 21 is fixated on the second side 112 of the first plate 11 of the intermediate beam 10 in an indirect manner, i. e., groove 21 is formed on the right side of the circumferential wall of through-hole 51 and additionally supported by a reinforcing strut 71, the circumferential wall of through-hole 51 as well as reinforcing strut 71 being directly fixated on the second side 112 of the first plate 11.

Further, a V-shaped tongue 32 extending linearly along the direction perpendicular to the drawing plane is arranged on the second side 122 of the second plate 12 of the intermediate beam 10, the tongue 32 being formed by a first inclined part 32a and a second inclined part 32b. The tongue 32 protrudes, from the second side 122 of the second plate 12, into the groove 21. Specifically, the first inclined part 32a and the second inclined part 32b are inclined with respect to each other (so as to form a lying letter V with the tip pointing to the right in Fig. 3A), and are also each inclined relative to the horizontal direction of Fig. 3A. With the tip of the letter V formed by the inclined parts 32a, 32b, each of the latter are fixedly connected to the second side 122 of the second plate 12. The inclination of the first inclined part 32a corresponds to the inclination of the inner surface of the end part 21b' of upper wall 21b of groove 21, and similarly, the inclination of the second inclined part 32b corresponds to the inclination of the inner surface of the end part 21c' of lower wall 21c of groove 21. (In the area close to the ground part 21a of groove 21, the inclination of the surfaces of inclined parts 32a, 32b may deviate, which is, however, not important for the functioning of the described coupling mechanism.) As a consequence of the corresponding inclinations of end parts 21b', 21c' of the walls 21b, 21c of groove 21 and the surfaces of the inclined parts 32a, 32b abutting against the end parts 21b', 21c', a similar effect of engaging is caused as described in the context of Fig. 3B with respect to the cave C and the bulge B, although, due to the void space between the two inclined parts 32a, 32b, the tongue 32 does not exhibit the compact shape (unlike to the compact bulge B of Fig. 3B). In particular, the first plate 11 and the second plate 12 can be moved relative to each other (i. e., the first and second plates 11, 12 are slidable or shiftable with respect to each other) in a direction perpendicular to the drawing plane of the figure, while at the same time, the first plate 11 and the second plate 12 are held in fixed positions relative to each other with respect to the drawing plane by the dovetail joint realized by groove 21 and tongue 32.

In the following, in order to avoid an unduly restriction of the invention to the use of dovetail joints as coupling mechanisms, the generic expression "guide rail" will be used to denote both, parts of a coupling arranged on the first plate 11 (e. g., the groove 21) as well as parts of that coupling arranged on the second plate 12 (e. g., the tongue 32). In this context, the expression "guide rail" shall be construed in a brought sense, i. e., in a sense not being restricted to a single linearly extending member with a rectangular cross-section, but also to composed structures like the groove 21 or the tongue 32.

Depending on application needs required in specific situations, different shapes of beams (profiles) may be used. For example, the outer beams of the battery pack (e. g., leftmost beam 10a and rightmost beam 10z in Fig. 8) may have one side adapted to provide mechanical support to a row of stacked battery cells and the opposite side adapted to terminate the battery pack, thereby and possibly providing additional structures such as sealing flanges for an interface to the top and bottom cover (not shown) of the battery pack. Those beams are referred to as "end beams" in the following. Other beams, however, may be shaped such that they provide mechanical support to two adjacent rows of stacked battery cells positioned at opposite sides of the respective beam. These beams are referred to as "intermediate beams" throughout this description. One example of intermediate beam has been introduced the with the help of Figs. 1 to 3.

Furthermore, for the sake of brevity, the following expressions shall be introduced: A plate having one side configured to provide mechanical support to a row of stacked battery cells shall be referred to as a "cell supporting plate," whereas a plate not having a side configured to provide mechanical support to a row of stacked battery cells shall be referred to as an "end plate."

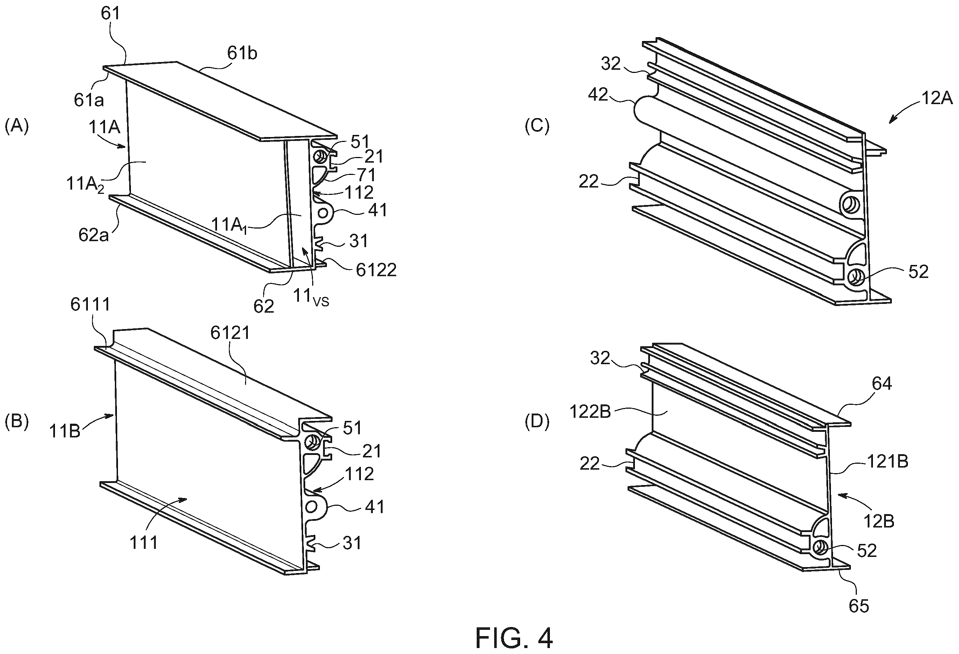

Preferably, different kinds of beams can be simply assembled by using different types of first and second plates, wherein each type the first plate is combinable (i. e., can be coupled) with each type of second plate. Examples of those different kinds of plates are given in Figure 4.

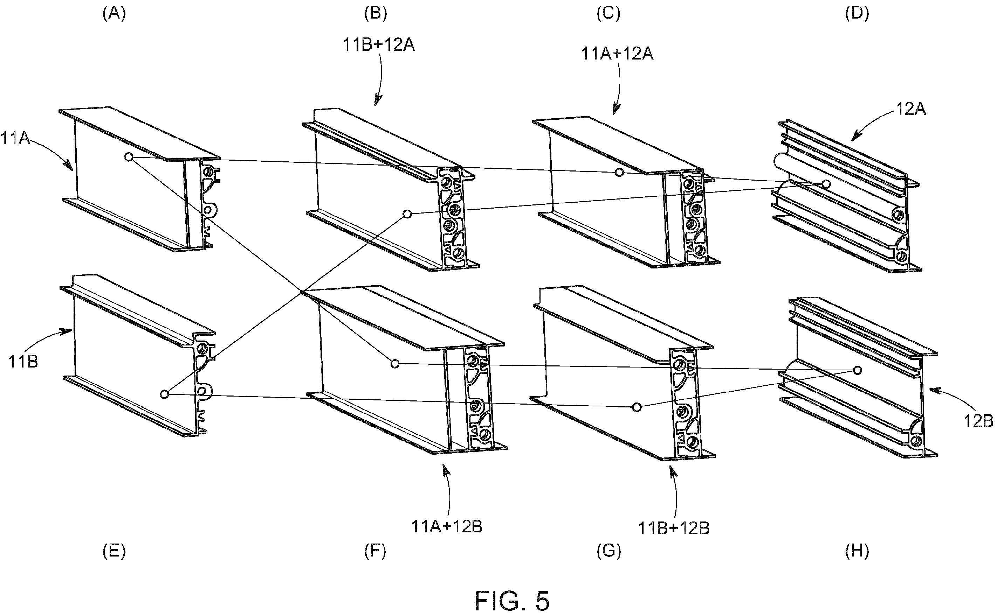

On the left side of Fig. 4, two different types of first plates are illustrated, whereas on the right side of Fig. 4, two different types of second plates are shown. Specifically, the type of a first plate 11B depicted in Fig. 4B corresponds to the first plate 11 as shown in Figs. 1 to 3, and the type of a second plate 12A depicted in Fig. 4C corresponds to the second plate 12 of Figs. 1 to 3. As described in the context of Fig. 1, first plate 11 as well as second plate 12 and the side adapted to provide mechanical support to a row of stacked battery cells. Accordingly, the type of first plate 11B depicted in Fig. 4B as well as the type of second plate 12A depicted in Fig. 4C constitute cell supporting plates. The type of the first plate 11A illustrated in Fig. 4A, however, constitutes an end plate. In particular, first plate 11A is realized as a double plate, i. e., first plate 11A comprises two parallel sub-plates 11A₁ and 11A₂, between which a void space 11vs is left. By varying the thickness of the void space 11vs, the overall thickness of first plate 11A may be adapted according to the required geometrical dimensions of the battery pack, when first plate 11A is used as part of a frame of the battery pack (e. g., see first beam 10a in the battery pack of Fig. 8). Also, void space 11vs provides additional thermal insulation between the exterior of the battery pack and the inside of the battery pack, wherein battery cells 88 are arranged (see Fig. 6). The sub-plates 11A₁ and 11A₂ are held in position by two closing members 61, 62, which also confine the void space 11vs in the vertical direction with respect to the orientation of first plate 11A in Fig. 4A. The upper closing members 61 extends, in a horizontal direction, into flanges 61a, 61b protruding at the upper edge of plate 11A to the left front to the right. Unlike to the left upper flange 6111 of the first plate 11 depicted in Figs. 1 to 3 and 4B, the left upper flange 61a of first plate 11A is directly arranged at the top edge of first plate 11A. However, the right of the flange 61b of first plate 11A exhibits a shape corresponding to that of the right upper flange 6121 of first plate 11. Left upper flange 61a and left lower flange 62a can be used as an interface for mounting the end plate 11A to a top cover (not shown) and bottom cover (not shown), respectively, of the battery pack. Further, each of the structures provided on the right surface of the right subplate 11A₁ (i. e., the right upper flange, through-hole 51, upper groove 21, reinforcing strut 71, cooling channel 41, lower tongue 31, and the right lower flange 6122) correspond to respective structures provided on the surface of the second side 112 of first plate 11 as described above in the context of Fig. 1. Accordingly, the type of first plate 11B illustrated in Fig. 4A can be readily coupled to the second plate 12A depicted in Fig. 4C, which is identical to the second plate 12 as illustrated in Figs. 1 to 3 (see Fig. 5C).

Also, the type of the second plate 12B illustrated in Fig. 4D constitutes an end plate. The flanges 64, 65 protruding from the first side (right side) of the second plate 12B are positioned and formed in a similar manner as the flanges 61a, 62a protruding to the left side from first plate 11A depicted in Fig. 4A, except for their orientation to the right. On the other hand, the structures arranged on the second side (left side) the second plate 12B each correspond to respective structures arranged on the second side of second plate 12 as described above in the context of Fig. 1, with the only difference that the cooling channel 42 is omitted in case of the type of second plate 12B illustrated in Fig. 4D. The reason for the latter is simply that second plate 12B is an end plate such that in use, unlike to the second plate 12 shown in Figs. 1 to 3 and 4C, there will be no battery cells next to the right side of second plate 12B. From the above it becomes clear that the type of second plate 12B illustrated in Fig. 4D can be readily coupled to the first plate 11B depicted in Fig. 4B, which is identical to the first plate 11 as illustrated Figs. 1 to 3 (see Fig. 5G). However, the type of second plate 12B illustrated in Fig. 4D can just as well be coupled to the type of first plate 11A illustrated in Fig. 4A, though, of course, this combination may be rarely used as it is a combination of two end plates (see Fig. 5F).

A compilation of the different combinations possible by coupling the two types of first plates 11A, 11B illustrated in Figs. 4A and 4B, respectively, to the two types of second plates 12A, 12B illustrated in Figs. 4C and 4D, respectively, as provided by Figure 5. Each of the four combinations yields a specific type of beam. The first and the last column in Fig. 5 show again the two types of first plates and the two types of second plates, respectively, which are depicted in the left column and the right column of Fig. 4, respectively. Specifically, Fig. 5A shows the first end plate 11A of Fig. 4A, Fig. 5E shows the first cell supporting plate 11B of Fig. 4B, Fig. 5D shows the second cell supporting plate 12A of Fig. 4C, and Fig. 5H shows the second end plate 12B of Fig. 4D.

Further, the different beams assembled by the four possible combinations of the above-described types of plates are shown in the second and third column of Fig. 5. Specifically, Fig. 5B illustrates the first cell supporting plate 11B (Figs. 4B / 5E) being coupled to the second cell supporting plate 12A (Fig. 4C / 5D). The beam resulting from this combination corresponds to the intermediate beam 10 as described above in the context of Figs. 1 to 3. Further, Fig. 5C illustrates the first end plate 11A (Fig. 4A / 5A) being coupled to the second cell supporting plate 12A (Fig. 4C / 5D). This combination results in the first end beam 10a as illustrated in Figs. 6 to 8 as the beam terminating battery pack on the left side (see below). Moreover, Fig. 5F illustrates the first end plate 11A (Fig. 4A / 5A) being coupled to the second end plate 12B (Figs. 4D / 5H). This combination is normally not used in a frame for supporting rows of stacked battery cells according to the invention, as it is a combination of two end plates and thus, none of the lateral sides of the beam of Fig. 5F is adapted to give technical support to row of stacked battery cells. However, this type of beam may be used in other situations such as providing additional support to the frame as a whole when being mounted, e. g., in a housing or the like (not shown). Finally, Fig. 5G illustrates the first cell supporting plate 11B (Figs. 4B / 5E) being coupled to the second end plate 12B (Figs. 4D / 5H). This combination results in the second end beam 10z as illustrated in Figs. 6 to 8 as the beam terminating battery pack on the right side (see below).

Figure 6 schematically illustrates the perspective view on an embodiment of a battery pack 100 according to the invention. Three rows of stacked battery cells 80a, 80b, 80c are mounted into the frame using the beams as described above with reference to the foregoing Figs. 1 to 5. Each of the beams is orientated along the direction of the z-axis of the coordinate system depicted in the figure. Here, each row of stacked battery cells comprises two battery cell stacks arranged in parallel and adjacent to each other with respect to the y-axis. For example, the first row of stacked battery cells 80a (i. e., the leftmost row of stacked battery cells in Fig. 6) comprises a first battery cell stack 80a₁ and a second battery cell stack 80a₂, each of the latter orientated along the z-axis. In an isolated state (i. e., not being mounted in a frame), the first and second cell stacks 80a₁, 80a₂ may be held together by a holding means 89, which may also provide further means of the row of stacked battery cells 80a, e. g., electric terminals (not shown). The second row of stacked battery cells 80b and the third row of stacked battery cells 80c are assembled in a similar manner.

Specifically, the first row of stacked battery cells 80a is mounted between a first end beam 10a that corresponds to the end beam shown in Fig. 5C and a first intermediate beam 10b that corresponds to the intermediate beam shown in Figs. 2C and 5B. As described above, the first end beam 10a is assembled by coupling the first end plate 11A of Fig. 5A with the second cell supporting plate 12A of Fig. 5D, whereas the first intermediate beam 10b is assembled by coupling a first cell supporting plate 11B of the type as shown in Fig. 5E with the second cell supporting plate 12A of the type as shown in Fig. 5D. Further, the second row of stacked battery cells 80b is mounted to between the first intermediate beam 10b as described above and a second intermediate beam 10c, which has an assembly identical to that of the first intermediate 10b. Finally, the third row of stacked battery cells 80c is mounted between the second intermediate beam 10c as described above and a second end beam 10z that corresponds to the end beam shown in Fig. 5G. As described in the context of Fig. 5, the second end beam 10z is assembled by coupling the first cell supporting plate 11B of Fig. 5E with the second end plate 12B of Fig. 5H.

Visible at the front side of the depicted battery pack 100 is that both of the lateral sides (i. e., the left and right sides in the figure) of each row of stacked battery cells 80a, 80b, 80c is arranged, along the direction of the x-axis of the coordinate system, between embracing flanges protruding towards the respective row of stacked battery cells from the cell supporting plates abutting the respective row of stacked battery cells. These flanges have been described already above with respect, e. g., to Figs. 1 and 5. Additionally, the lateral sides of each row of stacked battery cells 80a, 80b, 80c may each be glued to the respective abutting plate. At the rear side of the battery pack 100 illustrated in Fig. 6, each of the beams 10a, 10b, 10c, 10z are mounted, with their respective rear ends (or distal ends) to the rear bar 94 extending parallel to the y-axis of the coordinate system and thus perpendicular to each of the beams 10a, 10b, 10c, 10z. Also, although not shown in Fig. 6, a front bar may be mounted in a similar manner to each of the respective front end (or proximal ends) of the beams 10a, 10b, 10c, 10z (see Fig. 8). In the embodiment of Fig. 6, the frame is built by first and second and beams 10a, 10z, the two intermediate beams 10b, 10c, the rear bar 94, and possibly also the front bar (not shown).

As can be taken from the description concerning Figs. 1 to 5, each of the beams 10a, 10b, 10c, 10z is assembled from a pair of plates being coupled together such that any displacement of the respective plates relative to each other in a direction perpendicular to the z-axis are inhibited. Thus, each of the rows of stacked battery cells 80a, 80b, 80c it held, by the frame, in a fixed position as to the direction of the x-axis (vertical direction) as well as in a fixed position as to the direction of the y-axis (horizontal direction). However, in each beam, the respective first and second plate building this beam are couple such to each other that they are movable relative to each other in a direction parallel to the z-axis of the coordinate system. Of course, this presumes that at least one of the plates of the respective beam is not held in a fixed position with respect to the z -direction by means of the rear bar 94 or a front bar. In other words, if required, a plate to be moved has to be detached from the rear bar 94 and/or a front bar. Also, it is clear that at least one of the rear bar 94 and, if applicable, the front bar must be demounted from the battery pack 100 to give way for a movement of the plates parallel to the z-axis. Thus, for the following, any possible mounting of beams 10a, 10b, 10c, 10z to a rear bar and/or the front bar is neglected.

Due to the above-described moveability of the two plates in a beam relative to each other, each of the rows of stacked battery cells 80a, 80b, 80c can be pulled out of the battery pack 100. This is schematically illustrated in Figure 7. Here, the second row of stacked battery cells 80b has been pulled to the front with respect to the remaining parts of the battery pack 100. This is made possible in that, starting from the situation illustrated in Fig. 6, the second plate 12b of first intermediate beam 10b has been shifted against the z-direction of the coordinate system relative to the first plate 11b of first intermediate beam 10b. Likewise, the first plate 11c of second intermediate beam 10c has been shifted against the z-direction relative to the second plate 12c of second intermediate beam 10c.

In other words, the second row of stacked battery cells 80b together with the second plate 12b of first intermediate beam 10b and the first plate 11c the second intermediate beam 10c can be regarded as a drawer or tray, which can be pulled out of the battery pack 100 in the direction indicated by the arrow A or, if the "tray" is already pulled out as illustrated in Fig. 7, can be pushed back into the battery pack 100 against the direction indicated by the arrow A. Of course, the tray comprising the second row of stacked battery cells 80b can also be removed from the battery pack 100 and be replaced by a further tray assembled in an identical manner and having same geometry as the shown tray with the row of stacked battery cells 80b. This constitutes an easy way of repairing the battery pack 100, in case of a defective second row of stacked battery cells 80b.

Fig. 7 illustrates a concept of a split beam concept and an advantage thereof in an exemplary way, wherein a tray comprising the second row of stacked battery cells 80b together with the second plate 12b of the first intermediate beam 10b and the first plate 11c the second intermediate beam 10c is pulled out of the battery pack 100. It is understood that a competing similar manner, also each of the other trays (i. e., in the shown embodiment, the tray comprising the first row of stacked battery cells 80a together with respective first and second plates of the respective adjacent beams 10a, 10b and the tray comprising the third row of stacked battery cells 80c together with respective first and second plates of the respective adjacent beams 10z, 10c) can be pulled out of the battery pack 100 or pushed into the battery pack 100. Accordingly, also the replacement of the first row of stacked battery cells 80a or the third row of stacked battery cells 80c can be easily performed with the frame and battery pack 100 depicted in Fig. 7.

In Figure 8, a further embodiment of a battery pack according to the invention is illustrated. The shown battery pack 100A comprises six rows of stacked battery cells 80a, 80b, 80w, 80x, 80y, 80z orientated in parallel to each other in the direction of the z-axis the coordinate system. Similar to the embodiment shown in Fig. 6, each of the six rows of stacked battery cells 80a, 80b, 80w, 80x, 80y, 80z is mounted between two beams, i. e., one beam attached to the left lateral side of the respective row of stacked battery cells and further beam attached to the right lateral side of the respective row of stacked battery cells. Specifically, the first row of stacked battery cells 80a (counted from the left to the right) is mounted between the first end beam 10a and the first intermediate beam 10b in the fashion corresponding to that described above as to the first row of stacked battery cells 80a within the embodiment of the battery pack 100 of Fig. 6. Similarly, the sixth row of stacked battery cells 80z is mounted between the fifth intermediate beam 10f and the second end beam 10z in the fashion corresponding to that described above as to the third row of stacked battery cells 80c within the embodiment of the battery pack 100 of Fig. 6. Further, each of the second, third, fourth, and fifth row of stacked battery cells 80b, 80w, 80x, 80y is mounted between two intermediate beams attached to the respective lateral sides of the respective row of stacked battery cells.

Each of the beams 10a, 10b, 10c, 10d, 10e, 10f, 10z is orientated along the direction of the z-axis of the coordinate system. The rear ends (distal ends) of the beams are each mounted to a rear bar 94 orientated perpendicular to the beams along the direction of the y-axis. Likewise, the front ends (proximal ends) of the beams are each mounted to a front bar 92 orientated parallel to the rear bar 94. Accordingly, the whole ensemble of beams, bars, and rows of stacked battery cells extends on a plane parallel to the y-z-plane of the coordinate system. Each of the front and rear bars 92, 94 may comprise a serious of through-holes 90, through which screws or bolts can be guided so as to penetrate into respective through-holes 90 arranged in plates of the beams, as illustrated, e. g., in Fig. 1. For example, the front bar 92 may be mounted to the front end (proximal end) of the first intermediate beam 10b by a screw or bolt guided through the through-hole 90 visible on the front side of front bar 92, the screw or bolt than penetrating into the upper through-hole 51 arranged on the second side 112 of the first plate 12 of intermediate beam 10b, which corresponds to the intermediate beam 10 shown in Fig. 1.

With the above explanations concerning the beams as each being assembled using a pair of coupled plates (see the description as to Figs. 1 to 5) and the remarks as to Fig. 7, it follows that each of the rows of stacked battery cells 80a, 80b, 80w, 80x, 80y, 80z together with plates of the beams to which the respective row of stacked battery cells is attached forms of a drawer or tray which can be pulled out of the battery stack 100A or pushed into the battery stack 100A, if the plates connected to the respective row of stacked battery cells are not fixated to the front bar 92 and/or the rear bar 94, and at least one of the front bar 92 and the rear bar 94 is demounted from the battery pack 100A.

A grip or handle 98 may also be mounted onto the battery pack in order to facilitate pulling out the battery pack from a housing (not shown), wherein the battery pack may be accommodated, or to put it back again into the housing. Also, further means required for battery pack such as electric terminals and the like may be arranged on the grid or handle 98. In the battery pack 100A depicted in Fig. 8, the grip or handle 98 is mounted to the left ends of the front and rear bar 92, 94.

Figure 9 schematically illustrates the heat propagation between two neighbored rows of stacked battery cells 80ᵢ, 80ᵢ₊₁ through an intermediate beam 10ᵢ₊₁, which can be used in embodiments of the frame according to the invention. In the example, the intermediate beam 10ᵢ₊₁ corresponds to the intermediate beam 10 shown in Figs. 1 and 2 and can be any one of the intermediate beams 10b, 10c used in the battery pack 100 of Figs. 6 and 7 or any one of the intermediate beams 10b, 10c, 10d, 10e, 10f used in the alternative embodiment of a battery pack 100A presented in Fig. 8.

The safety of the battery pack depends on its ability to avoid or at least to decelerate the heat propagation from a row of stacked battery cells affected by an abnormal thermal event (such as a thermal run-away) to the neighbored rows of stacked battery cells in order to avoid or at least two decelerate a spread of the thermal event within the battery pack. Thus, it is desirable that the beams, and in particular the intermediate beams, provide a high degree of heat insulation. A good heat insulation is provided by vacuum or gases such as air. As illustrated in Fig. 9, most of the space S between the first plate 11ᵢ₊₁ and the second plate 12ᵢ₊₁ of the intermediate beam 11ᵢ₊₁ is left void and thus filled with air. The (circumferential walls of the) cooling channels 41ᵢ₊₁, 42ᵢ₊₁ arranged on the first plate 11ᵢ₊₁ and the second plate 12ᵢ₊₁, respectively, do not come into mechanical contact with each other. In fact, the only mechanical contacts between the first plate 11ᵢ₊₁ and the second plate 12ᵢ₊₁ are established by the flanges and the dovetail joints. Specifically, a mechanical contact area L₁ is established between the upper flanges 6121ᵢ₊₁, 6221ᵢ₊₁ protruding from the respective second sides of first plate 11ᵢ₊₁ and the second plate 12ᵢ₊₁, respectively. Similarly, a further mechanical contact area L₆ is established between the lower flanges 6122ᵢ₊₁, 6222ᵢ₊₁ protruding from the respective second sides of first plate 11ᵢ₊₁ and the second plate 12ᵢ₊₁, respectively. Also, there are mechanical contact areas L₂, L₃ between the groove 21ᵢ₊₁ and the tongue 32ᵢ₊₁ of the upper dovetail joint and further contact areas L₄, _{L5} between the groove 22ᵢ₊₁ and the tongue 31ᵢ₊₁ of the lower dovetail joint of intermediate beam 10ᵢ₊₁.

Accordingly, in case of the thermal event T such as a thermal run-away occurring, e. g., in the left row of stacked battery cells 80ᵢ abutting to the first plate 11ᵢ₊₁ and thus immediately heating the first plate 11ᵢ₊₁ as indicated by the arrows H, the heat propagation to the second plate 12ᵢ₊₁ and then further to the right road of stacked battery cells 80ᵢ₊₁ is largely inhibited by the void space between the two plates 11ᵢ₊₁, 12ᵢ₊₁. The heat exchange between the plates is essentially restricted to the above-identified six areas L₁, L₂, L₃, L₄, L₅, L₆, where the two plates 11ᵢ₊₁, 12ᵢ₊₁ are in direct mechanical contact to other. This is indicated by the small arrows being based in the contact areas L₁, L₂, L₃, L₄, L₅, L₆, which also indicate the respective direction of the heat propagation. However, as can be seen from the figure, the total area built by the areas L₁, L₂, L₃, L₄, L₅, L₆ is small in comparison to the total area of the second sides of each of the plates 11ᵢ₊₁, 12ᵢ₊₁. Thus, intermediate beam 10ᵢ₊₁ has the advantage of providing an extremely high degree of heat insulation. Hence, due to the use of the above type of intermediate beam 10ᵢ₊₁ in the embodiments of battery packs shown in Figs. 6 to 8, an expansion or propagation of a thermal event from one affected row of stacked battery cells to other rows of stacked battery cells is inhibited.

The above explanations as to Fig. 9 can be summarized as follows: In case of thermal events such as a thermal run-away within one row of stacked battery cells, the concept of the split beams (profiles) reduces the heat impact to neighboring rows of stacked battery cells to a minimum, since there are only minor contact surfaces within the beams (i. e., between the plates, which the beams are assembled of), as shown by the contact areas L₁, L₂, L₃, L₄, L₅, L₆ and indicated by the respective arrows based in these contact areas.

Figure 10 schematically illustrates a possibility of fixation rows of stacked battery cells (i. e., all or at least a part of the battery cells comprised in each of these rows of stacked battery cells) to an intermediate beam 10ᵢ₊₁ corresponding to that shown in Figs. 1 and 2. In the shown example, a first layer of adhesive 81 is used to glue the left row of stacked battery cells 80ᵢ, with its right lateral side, to the first side (left side) of first plate 11ᵢ₊₁. Correspondingly, a second layer of adhesive 82 is used to glue the right row of stacked battery cells 80ᵢ₊₁, with its left lateral side, to the first side (right side) of second plate 12ᵢ₊₁. Thus, apart from the mechanical support to the rows of stacked battery cells to a beam provided by the flanges protruding from the respective first sides of the plates (see the corresponding remarks in the above description as to Fig. 1), also chemical means can be used, in embodiments, for the fixation of the rows of stacked battery cells to a beam. Nevertheless, it is possible to draw the rows of stacked battery cells out of the battery pack, as illustrated in Fig. 7, as it is not necessary to solve the fixation (provided by the adhesive layers) between a certain row of stacked battery cells and the two beams, to which it is fixated, because the plates to which the row of stacked battery cells is fixated are pulled out of the battery pack together with the row of stacked battery cells exploiting the assembly of the beams, which are performed by two plates be telescoped into one another (as shown, e. g., in Figs. 2B and 7).

Hence, if a failure occurs within the row of stacked battery cells or battery cell module, it is possible to easily exchange the defective unit even if the rows of stacked battery cells and/or individual battery cells 88 are joined to the respective adjacent beams with structural adhesives such as the adhesive layers 81, 82 shown in Fig. 10.

As already stressed in the context of Fig. 3, there are various realizations of coupling means in the sense of the present invention, i. e., coupling means that allow for a linearly slidably connection between two members (such as plates) along or against one direction, but inhibit any displacement of these members relative two each other in or against other directions.

In the following, a few connections are presented and schematically illustrated by Figures 11, 12, and 13, which may be used as alternatives for the dovetail joint described above and shown in Fig. 3. Specifically, a simple joint may be used as shown in Figure 11. The illustrated joint allows the coupling of a first member 201 and a second member 202. The first member 201 comprises a first linear edge 210 being formed thickened and having a bulge shape. The second member 202 comprises a second linear edge 220 having a tube-like structure with a slit. Through the slit, the first member 201 extends into the interior of the second linear edge 220 such that the first linear edge 210 is accommodated in the interior of the second linear edge 220. In other words, the first linear edge 210 of the first member 201 and the second linear edge 220 of the second member 202 are in engagement with each other so as to form a coupling between the first member 201 and the second member 202. Due to the linear expansion of the first linear edge 210 as well as of the second linear edge 220 along the z-direction, the coupling allows for linearly shifting the first member 201 relative to the second member 202 in or against the z-direction.

To use the simple joint illustrated in Fig. 11A with the present invention, the first member 201 may be connected to the first plate of a beam as described above, and the second member 202 may be connected second plate of that beam. For example, the upper dovetail joint (established by upper groove 21 and upper tongue 32) of the intermediate beam 10 illustrated in Figs. 1 and 3A may thus be replaced by the joint shown in Fig. 10. However, depending on the width of the slit, rotations of the first member 201 relative to the second member 202 around the z-axis may be possible to a certain degree. In order to avoid that this results in undesired rotational degree of freedom between the first plate and the second plate of the beam, two of these joints may be used to connect the first plate with the second plate. For example, in the intermediate beam 10 illustrated in Figs. 1 and 3A, both, the upper dovetail joint (upper groove 21 and upper tongue 32) as well as the lower dovetail joint (lower groove 22 and lower tongue 31) may each be replaced by a joint of the type as shown in Fig. 11A.

In any case, irrespectively of the type of coupling means used to couple the first plate and second plate in a beam, it is advantages to use (at least) two connections / joints placed with a distance to each other to increase the rotational stability of the established coupling of the plates (i. e., to avoid rotations of the plates relative to each other).

To facilitate the establishment of the connection with the joint as illustrated in Fig. 11A, a part of the first linear edge 210 may comprise a skewed plane 210a, i. e., a plane 210a inclined with respect to the plane, in which the first member 201 extends. This is schematically illustrated in Fig. 11B. Then, the diameter of the first linear edge 210 is reduced in a direction perpendicular to the skewed plane 210a in comparison to the diameter of the first linear edge 210 in a direction perpendicular to the plane, in which the first member 201 extends. Accordingly, the first linear edge 210 can be pushed into the second linear edge 220 through the slit of the latter, if the first linear edge 210 is led through the slit in a direction X parallel to the skewed plane 210a (wherein, of course, the direction X must not be parallel to the z-direction as shown in Fig. 11A). If subsequently the second member 202 is rotated relative to the first member 201 around the z-direction (in a clockwise rotational direction from the perspective of Fig. 11B), the coupling between the first member 201 and the second member 202 established, as illustrated schematically in Fig. 11C.

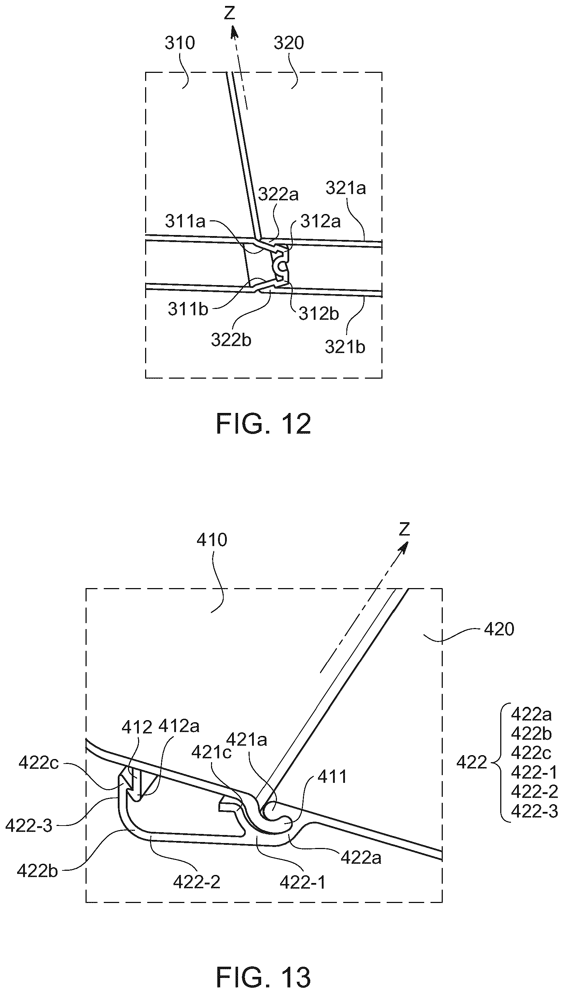

A further type of connection that can be used to realize the coupling means in embodiments of the present invention is a clip joint as schematically illustrated in Figure 12. Here, a first member 310 is connected to a second member 320. The first member 310 may be connected to a first plate of the beam as described above in the context of Figs. 1 and 3A, and the second member 320 may be connected to the second plate of the beam. Each of the first member 310 and the second member 320 extends linearly along the z-direction. The first member 310 comprises a pair of inclined surfaces (i. e., a first inclined surface 311a and a second inclined surface 311b) running toward each other in the direction towards the second member 320. A first elevation 312a is arranged on the first inclined surface 311a and, correspondingly, as second elevation 312b is arranged on the second inclined surface 311b. Each of the elevations 312a, 312b extends linearly along the z-direction. The second member 320 comprises a pair of parallel planes (i. e., first plane 321a and second plane 321b). A first hook 322a is arranged at an edge of the first plane 321a on the side facing the second plane 321b and, correspondingly, a second hook 322b is arranged at an edge of the second plane 321b on the side facing the first plane 321a. Each of the hooks 322a, 322b extends linearly along the respective edge of the respective plane 321a, 321b in the z-direction. The pair of inclined surfaces 311a, 311b of first member 310 is configured to be shifted into the space between the planes 321a, 321b such that the first inclined surface 311a comes into contact with the first plane 321a and, correspondingly, the second inclined surface 311b comes into contact with the second plane 321b, as illustrated in Fig. 12. In this state, the first hook 322a arranged on the first plane 321a engages with the first elevation 312a arranged on the first inclined surface 311a and, correspondingly, the second hook 322b arranged on the second plane 321b engages with the second elevation 312b arranged on the second inclined surface 311b. In other words, the pair of inclined surfaces 311a, 311b and the pair of hooks 322a, 322b establish a clip joint. Due to the afore-described construction of the clip joint, the first member 310 can be slid or shifted in or against the z-direction relative to the second member 320, while any other displacement as well as rotations of the first member 310 and the second member 320 relative to each other are impeded by the illustrated clip joint.

Yet another type of connection that can be used to realize the coupling means in embodiments of the present invention is the joint schematically illustrated in Figure 13, which is a further type of clip joint. Here, a first member 410 is connected to a second member 420. The first member 410 may be connected to a first plate of the beam as described above in the context of Figs. 1 and 3A, and the second member 420 may be correspondingly connected to the second plate of the beam. Each of the first member 410 and the second member 420 extends linearly along the z-direction and exhibits an essentially planar shape. The first member 410 comprises a first protrusion 412 protruding essentially perpendicularly from the first member 410. At the tip of the first protrusion 412, a first hook 412a is arranged. Both, the first protrusion 412 and the first hook 412a extend linearly along the z-direction. At an edge of first member 410, a nose 411 is arranged, which likewise extends linearly along the z-direction. The nose 411 protrudes slightly inclined with respect to the plane of first member 410 on the side of first member 410, on which also the first protrusion 412 is arranged. The profile of nose 411 may be curved. On the other hand, the second member 420 comprises an edge 421a being thickened in comparison to the thickness of the plane of second member 420 at positions not located on that edge 421a. A clip member 422 protrudes from one side of the second member 420. The clip member 422 extends linearly along the z-direction. The cross-sectional profile of clip member 422 perpendicular to the z-direction is buckled and protrudes over the thickened edge 421a of second member 420. Specifically, the clip member 422 comprises a first buckle 422a and a second buckle 422b. Accordingly, the clip member 422 comprises a first portion 422-1 between the plane of the second member 420 and the first buckle 422a of clip member 422, further comprises a second portion 422-2 between the first buckle 422a and the second buckle 422b, and further comprises a third portion 422-3 after the second buckle 422b. From the second portion of clip member 422, a second protrusion 421c is arranged protruding towards the extension of the plane, in which second member 420 extends. Of course, each of the buckles 422a, 422b and each of the portions 422-1, 422-2, 422-3 of clip member 422 is extending linearly along the z-direction. Due to this arrangement, a cave is formed between the thickened edge 421a of second member 420, the first portion 422-1 of clip member 422 and the second protrusion 421c. Specifically, the cave is shaped such that nose 411 of first member 410 can be accommodated in the cave. After the second buckle 422b, the clip member 422 bends into the third portion 422-3, which is arranged such as to protrude towards the extension of the plane, in which second member 420 extends. At the tip of the third portion 422-3, a second hook 422c is arranged.

To connect the first member 410 with the second member 420, the nose 411 of first member 410 is led into the cave formed by the thickened edge 421a of second member 420, the first portion 422-1 of clip member 422 and the second protrusion 421c as explained above. In this state, the first member 410 and the second member 420 are rotatable (up to some degree) with respect to each other around an axis directed along the z-direction through the interior of the cave. To fix the connection, the first member 410 has to be rotated such with respect to the second member 420 that the first protrusion 412 of first member 10 overlaps, within an area, with the third portion 422-3 of clip member 422 of second member 420 such that the first hook 412a engages with the second hook 422c. Once the first hook 412a is engaged with the second hook 422c, any rotational movement as well as any translational displacement of the first member 410 relative to the second member 420 is prevented, except for a translational shift of the first member 410 and the second member 420 relative to each other in or against the z-direction.

### Reference signs

- 10, 10ᵢ₊₁: intermediate beam
- 10a: first end beam
- 10b, c, d, e, f: intermediate beams
- 10z: second end beam
- 11, 11A, 11B, 11b, 11c, 11ᵢ₊₁: first plate
- 11A₁, 11A₂: sub-plates
- 11vs: void space
- 12, 12A, 12B, 12b, 12c, 12ᵢ₊₁: second plate
- 21, 22: grooves
- 21ᵢ₊₁, 22ᵢ₊₁: grooves
- 21a: ground part
- 21b, 21c: walls
- 21b', 21c': end parts
- 31, 32: tongues
- 31ᵢ₊₁, 32ᵢ₊₁: tongues
- 32a, 32b: inclined parts of a tongue
- 41, 41ᵢ₊₁, 42, 42ᵢ₊₁: cooling channels
- 51, 52: through-holes
- 61, 62: closing members
- 61a, 61b, 62a, 64, 65: flanges
- 71, 72: reinforcing strut
- 80a, 80b, 80c, 80w, 80x, 80y, 80z: rows of stacked battery cells
- 80ᵢ, 80ᵢ₊₁, 80a₁, 80a₂: rows of stacked battery cells
- 81, 82: adhesive layers
- 88: battery cell
- 89: holding means
- 90: through-hole in front bar
- 92, 94: front and rear bar
- 98: grip or handle
- 100, 100A: battery pack
- 111, 112: first side and second side of first plate
- 121, 122: first side and second side of second plate
- 121B, 122B: first side and second side of second end plate
- 201,: first member
- 202: second member
- 210: first linear edge
- 210a: skewed plane
- 220: second linear edge

- 310: first member
- 311a, 311b: inclined surfaces
- 312a, 312b: elevations
- 320: second member
- 321a, 321b: planes
- 322a, 322b: hooks

- 410: first member
- 411: nose
- 412: first protrusion
- 412a: first hook
- 420: second member
- 421a: thickened edge
- 421c: second protrusion
- 422: clip member
- 422-1, 422-2, 422-3: portions
- 422a, 422b: buckles
- 422c: second hook

- 6111, 6112, 6121, 6122: flanges on first plate
- 6121ᵢ₊₁, 6122ᵢ₊₁: flanges on first plate
- 6211, 6212, 6221, 6222: flanges on second plate
- 6221ᵢ₊₁, 6222ᵢ₊₁: flanges on second plate
- A: arrow
- B: bulge
- C: cave
- D, -D: arrows
- d_{C}, d_{O}: diameters
- H: arrow indicating heat propagation
- L₁, L₂, L₃, L₄, L₅, L₆: areas of heat exchange
- O: opening
- P1, P2: structures
- R: rear side of cave
- S: space
- S1, S2: surfaces
- T: thermal runaway
- x, y, z: axes of a Cartesian coordinate system
- X: direction

## Claims

1. A frame for providing structural support for a battery pack (100) having at least two rows of stacked battery cells (80a, 80b, 80c), the frame comprising:
a first end beam (10a) and a second end beam (10z); and
one or more intermediate beams (10b, 10c);
wherein the one or more intermediate beams (10b, 10c) are arranged between the first end beam (10 a) and the second end beam (10z), and each of the beams (10a, 10b, 10c, 10z) is orientated along a first direction (z) perpendicular to a virtual plane;
wherein each of the beams (10a, 10b, 10c, 10z) comprises:
a first plate (11) having a first side (111) and a second side (112) opposite to the first side (111) of the first plate (11), and
a second plate (12) having a first side (121) and a second side (122) opposite to the first side (121) of the second plate (12), and
a coupling means slidably coupling the second side (112) of the first plate (11) to the second side (122) of the second plate (12) such that any displacement of the first plate (11) relative to the second plate (12) is inhibited except for shifting the first plate (11) relative to the second plate (12) in or against the first direction (z).

2. The frame according to claim 1, wherein the coupling means of each of the beams (10a, 10b, 10c, 10z) comprises:
a first guiding means comprising one or more first guide rails; and
a second guiding means comprising one or more second guide rails,
wherein each of the first guide rails is fixedly arranged on the surface of the second side (112) of the respective first plate (11) and extending linearly along the first direction (z);
wherein each of the second guide rails is fixedly arranged on the surface of the second side (122) of the respective second plate (12) and extending linearly along the first direction (z); and
wherein at least one of the first guide rails and at least one of the second guide rails are engaged with each other.

3. The frame according to claim 2, wherein for at least one pair of a first guide rail and a second guide rail being engaged:
the first guide rail exhibits a first cross-sectional profile in any plane perpendicular to the first direction (z) and intersecting the first guide rail, independent from the position of the plane with respect to the first direction (z); and
the second guide rail exhibits a second cross-sectional profile in any plane perpendicular to the predefined direction (z) and intersecting the second guiding means, independent from the position of said plane with respect to the first direction (z);
wherein:
either the shape of the first cross-sectional profile comprises a cavity (C) with an opening (O) and the second cross-sectional profile comprises a bulge (B) fitting into the cavity (C), wherein the bulge (B) is connected to the remaining second cross-section profile by a connection part passing through the opening (O) of the cavity (C),
or the shape of the second cross-sectional profile comprises a cavity (C) with an opening (O) and the first cross-sectional profile comprises a bulge (B) fitting into the cavity (C), wherein the bulge (B) is connected to the remaining first cross-section profile by a connection part passing through the opening (O) of the cavity (C).

4. The frame according to claim 2, wherein the coupling means of at least one of the beams (10a, 10b, 10c, 10z) comprises at least one pair of a first guide rail and a second guide rail, wherein the first guide rail and the second guide rail are engaged with each other using a dovetail joint.

5. The frame according to any one of claims 1 to 4, wherein for each beam (10a, 10b, 10c, 10z):
one or more cooling channels (41) are arranged on the surface of the second side (112) of the respective first plate (11); and/or
one or more cooling channels (42) are arranged on the surface of the second side (122) of the respective second plate (12).

6. The frame according to any one of claims 1 to 5,
wherein for each of the intermediate beams (10b, 10c), the first side (111) of the respective first plate (11) is adapted to provide support for a lateral side of a row of stacked battery cells (80a) and the first side (121) of the respective second plate (12) is adapted to provide support for a lateral side of a further row of stacked battery cells (80b);
wherein for the first end beam (10a), the first side (121) of the respective second plate (12) is adapted to provide support for a lateral side of a row of stacked battery cells (80a); and
wherein for the second end beam (10z), the first side (111) of the respective first plate (11) is adapted to provide support for a lateral side of a row of stacked battery cells (80c).

7. The frame according to any one of claims 1 to 6, wherein the support provided for lateral sides of a row of stacked battery cells by each of the first sides (111, 121) of the first plate (11) and the second plate (12) is realized by at least one flange (6111, 6112, 6211, 6212).

8. The frame according to any one of claims 1 to 7, wherein for each of the beams (10a, 10b, 10c, 10z):
the surface of the second side (112) of the first plate (11) has an essentially trapezoidal shape extending between two parallel edges each being orientated along the first direction (z); and
the surface of the second side (122) of the second plate (12) has an essentially trapezoidal shape extending between two parallel edges each being orientated along the first direction (z).

9. The frame according to any one of claims 1 to 8,
wherein, for the first end beam (10a), the first side of the first plate (11A) may be adapted for being mounted to predefined external structures; and/or
wherein, for the second end beam (10z), the first side of the second plate (12B) may be adapted for being mounted to predefined external structures.

10. The frame according to any one of claims 1 to 9, further comprising:
a front bar (92), wherein the front bar (92) is orientated perpendicular to the first direction (z) and configured to be mechanically connected to each of the respective proximal ends of the first end beam (10a), the second end beam (10z) and each of the intermediate beams (10b, 10c), when viewed in the first direction (z); and/or
a rear bar (94), wherein the rear bar (94) is orientated perpendicular to the predefined direction (z) and configured to be mechanically connected to each of the respective distal ends of the first end beam (10a), the second end beam (10z) and each of the intermediate beams (10b, 10c), when viewed in the first direction (z).

11. A battery pack (100), comprising:
at least two rows of stacked battery cells (80a, 80b, 80c);
the frame according to any one of claims 1 to 10,
wherein the number of intermediate beams (10b, 10c) equals the number of rows of stacked battery cells (80a, 80b, 80c) reduced by one; and
wherein each of the rows of stacked battery cells (80a, 80b, 80c) is mounted between a pair of adjacent beams.

12. The battery pack according to claim 11, wherein the rows of stacked battery cells (80a, 80b, 80c) are each mounted to the respective adjacent beams using layers of adhesives (81, 82).

13. A vehicle using a power source comprising the battery pack (100) according to claims 11 or 12.

14. Method of assembling trays of stacked battery cells for use in a battery pack (100), the method comprising the following steps:
a1) providing at least two rows of stacked battery cells (80a, 80b, 80c);
a2) providing a first plate and a second plate for a first end beam (10a);
a3) providing a first plate and a second plate for a second end beam (10z);
a4) providing a first plate (11) for each of one or more intermediate beams (10b, 10c) and a second plate (12) for each of the one or more intermediate beam (10b, 10c), wherein the number of the first plate(s) (11) for the one or more intermediate beams (10b, 10c) is equal to the number of the second plate(s) (12) for the one or more intermediate beams (10b, 10c) and is equal to the of rows of stacked battery cells (80a, 80b, 80c) reduced by one;
wherein each of the first plate (11, 11A) and the second plate (12, 12B) has a first side (111, 121) and a second side (112, 122);
wherein the first plate (11A) and the second plate (12A) for the first end beam (10a) are configured for being coupled, with their respective second sides, to form the first end beam (10a), wherein the coupling inhibits any displacement of the first plate (11A) relative to the second plate (12A) except for shifting the first plate (11A) relative to the second plate (12A) in or against an elongate direction (z) of the first end beam (10a);
wherein the first plate (11B) and the second plate (12B) of the second end beam (10z) are configured for being coupled, with their respective second sides, to form the second end beam (10z), wherein the coupling inhibits any displacement of the first plate (11B) relative to the second plate (12B) except for shifting the first plate (11B) relative to the second plate (12B) in or against the elongate direction (z) of the second end beam (10z);
wherein the first plate (11) of the one or more intermediate beam (10b) is configured for being coupled with the second plate (12) of the one or more intermediate beam (10b) to form the one or more intermediate beam (10b), wherein the second side (112) of the first plate (11) is coupled to the second side (122) of the second plate (12), and wherein the coupling inhibits any displacement of the first plate (11) relative to the second plate (12) except for shifting the first plate (11) relative to the second plate (12) in or against the elongate direction (z) of the one or more intermediate beam (10b) formed by the first plate (11) and the second plate (12);
the method further comprising the following steps of:
b) creating a first end tray by mounting one of the rows of stacked battery cells (80a) between the first side of the second plate (12A) of the first end beam (10a) and the first side of the first plate (11) of an intermediate beam (10b);
c) creating a second end tray by mounting a further one of the rows of stacked battery cells (80c) between the first side of the second plate (12) of one of the intermediate beams (10c) not used in step b) and the first side of the first plate (11B) of the second end beam (10z);
d) if the number of rows of stacked battery cells is larger than two:
creating, for each of the remaining rows of stacked battery cells (80b), an intermediate tray, each of the intermediate trays created by mounting another one of the rows of stacked battery cells (80b) between the first side of the second plate (12) of an intermediate beam (10b) not yet mounted to a row of stacked battery cells and the first side of a first plate (11) of a further intermediate beam (10c) not yet mounted to a row of stacked battery cells.

15. A method for assembling a battery pack (100) with a frame according to any one of claims 1 to 9, the method comprising:
e) generating trays of stacked battery cells using the method according to claim 14;
f) assembling the first end beam (10a) by coupling the second side of the first plate (11A) of the first end beam (10a) with the second side of the second plate (12A) of the first end beam (10a);
g) assembling the second end beam (10z) by coupling the second side of the first plate (11B) of the second end beam (10z) with the second side of the second plate (12B) of the second end beam (10z);
h) if the number of rows of stacked battery cells equals two:
connecting the first end tray with the second end tray by assembling the only intermediate beam by coupling the respective second sides of the first plate (11) and the second plate (12) of the intermediate beam;
i) if the number of rows of stacked battery cells (80a, 80b, 80c) is larger than two:
performing the following sub-steps of:
i1) connecting the first end tray with an intermediate tray by assembling an intermediate beam (10b) by coupling the second side (122) of the uncoupled second plate (12) of the intermediate beam (10b) used in the first tray with the second side (112) of the first plate (11) used in one of the intermediate trays;
i2) if there is a further unconnected intermediate tray: connecting the further unconnected tray by assembling an intermediate beam by coupling the second side (112) of the uncoupled first plate (11) of an intermediate beam used in the intermediate tray connected in the foregoing step to the second side (122) of the second plate (12) of an intermediate beam used in the further intermediate tray;
i3) repeating step i2) until there is no further unconnected intermediate tray;
i4) connecting the second end tray (10z) by assembling an intermediate beam (10c) by coupling the second side (112) of the uncoupled first plate (11) of an intermediate beam (10c) used in the intermediate tray, which has been connected last in the foregoing sub-step i1) or i2), to the second side (122) of the second plate (12) of the intermediate beam (10c) used in the second end tray.

## Patentansprüche

1. Rahmen zur Bereitstellung einer strukturellen Abstützung für ein Batteriepack (100), das mindestens zwei Reihen gestapelter Batteriezellen (80a, 80b, 80c) aufweist, wobei der Rahmen umfasst:
einen ersten Endträger (10a) und einen zweiten Endträger (10z); und
einen oder mehrere Zwischenträger (10b, 10c);
wobei der eine oder die mehreren Zwischenträger (10b, 10c) zwischen dem ersten Endträger (10a) und dem zweiten Endträger (10z) angeordnet sind und jeder der Träger (10a, 10b, 10c, 10z) entlang einer ersten Richtung (z) ausgerichtet ist, die zu einer virtuellen Ebene senkrecht ist;
wobei jeder der Träger (10a, 10b, 10c, 10z) umfasst:
eine erste Platte (11), die eine erste Seite (111) und eine der ersten Seite (111) der ersten Platte (11) gegenüberliegende zweite Seite (112) aufweist, und
eine zweite Platte (12), die eine erste Seite (121) und eine der ersten Seite (121) der zweiten Platte (12) gegenüberliegende zweite Seite (122) aufweist, und
ein Kopplungsmittel, das die zweite Seite (112) der ersten Platte (11) gleitend mit der zweiten Seite (122) der zweiten Platte (12) derart koppelt, dass jede Verlagerung der ersten Platte (11) relativ zu der zweiten Platte (12) mit Ausnahme eines Verschiebens der ersten Platte (11) relativ zu der zweiten Platte (12) in oder entgegen der ersten Richtung (z) verhindert wird.

2. Rahmen nach Anspruch 1, wobei das Kopplungsmittel jedes der Träger (10a, 10b, 10c, 10z) umfasst:
eine erste Führungseinrichtung, die eine oder mehrere erste Führungsschienen umfasst; und
eine zweite Führungseinrichtung, die eine oder mehrere zweite Führungsschienen umfasst,
wobei jede der ersten Führungsschienen fest auf der Oberfläche der zweiten Seite (112) der jeweiligen ersten Platte (11) angeordnet und sich linear entlang der ersten Richtung (z) erstreckt;
wobei jede der zweiten Führungsschienen fest auf der Oberfläche der zweiten Seite (122) der jeweiligen zweiten Platte (12) angeordnet und sich linear entlang der ersten Richtung (z) erstreckt;
wobei mindestens eine der ersten Führungsschienen und mindestens eine der zweiten Führungsschienen miteinander in Eingriff stehen.

3. Rahmen nach Anspruch 2, wobei für mindestens ein miteinander in Eingriff stehendes Paar aus einer ersten Führungsschiene und einer zweiten Führungsschiene gilt:
die erste Führungsschiene weist unabhängig von der Lage der Ebene in Bezug auf die erste Richtung (z) in jeder Ebene, die senkrecht zur ersten Richtung (z) steht und die erste Führungsschiene schneidet, ein erstes Querschnittsprofil auf; und
die zweite Führungsschiene weist unabhängig von der Lage der Ebene in Bezug auf die erste Richtung (z) in jeder Ebene, die senkrecht zur vorgegebenen Richtung (z) steht und die zweite Führungseinrichtung schneidet, ein zweites Querschnittsprofil auf;
wobei,
entweder die Form des ersten Querschnittsprofils einen Hohlraum (C) mit einer Öffnung (O) umfasst und das zweite Querschnittsprofil einen in den Hohlraum (C) passenden Vorsprung (B) umfasst, wobei der Vorsprung (B) über einen durch die Öffnung (O) des Hohlraums (C) verlaufenden Verbindungsabschnitt mit dem verbleibenden zweiten Querschnittsprofil verbunden ist,
oder die Form des zweiten Querschnittsprofils einen Hohlraum (C) mit einer Öffnung (O) umfasst und das erste Querschnittsprofil einen in den Hohlraum (C) passenden Vorsprung (B) umfasst, wobei der Vorsprung (B) über einen durch die Öffnung (O) des Hohlraums (C) verlaufenden Verbindungsabschnitt mit dem verbleibenden ersten Querschnittsprofil verbunden ist.

4. Rahmen nach Anspruch 2, wobei das Kopplungsmittel mindestens eines der Träger (10a, 10b, 10c, 10z) mindestens ein Paar aus einer ersten Führungsschiene und einer zweiten Führungsschiene umfasst, wobei die erste Führungsschiene und die zweite Führungsschiene mittels einer Schwalbenschwanzverbindung miteinander in Eingriff stehen.

5. Rahmen nach einem der Ansprüche 1 bis 4, wobei für jeden Träger (10a, 10b, 10c, 10z) gilt:
ein oder mehrere Kühlkanäle (41) sind an der Oberfläche der zweiten Seite (112) der jeweiligen ersten Platte (11) angeordnet; und/oder
ein oder mehrere Kühlkanäle (42) sind an der Oberfläche der zweiten Seite (122) der jeweiligen zweiten Platte (12) angeordnet.

6. Rahmen nach einem der Ansprüche 1 bis 5,
wobei für jeden der Zwischenträger (10b, 10c) die erste Seite (111) der jeweiligen ersten Platte (11) dazu ausgelegt ist, eine Seitenfläche einer Reihe gestapelter Batteriezellen (80a) abzustützen, und die erste Seite (121) der jeweiligen zweiten Platte (12) dazu ausgelegt ist, eine Seitenfläche einer weiteren Reihe gestapelter Batteriezellen (80b) abzustützen;
wobei für den ersten Endträger (10a) die erste Seite (121) der jeweiligen zweiten Platte (12) dazu ausgelegt ist, eine Seitenfläche einer Reihe gestapelter Batteriezellen (80a) abzustützen;
wobei für den zweiten Endträger (10z) die erste Seite (111) der jeweiligen ersten Platte (11) dazu ausgelegt ist, eine Seitenfläche einer Reihe gestapelter Batteriezellen (80c) abzustützen.

7. Rahmen nach einem der Ansprüche 1 bis 6, wobei die Abstützung, die für Seitenflächen einer Reihe gestapelter Batteriezellen durch jede der ersten Seiten (111, 121) der ersten Platte (11) und der zweiten Platte (12) bereitgestellt wird, durch mindestens einen Flansch (6111, 6112, 6211, 6212) realisiert ist.

8. Rahmen nach einem der Ansprüche 1 bis 7, wobei für jeden der Träger (10a, 10b, 10c, 10z) gilt:
die Oberfläche der zweiten Seite (112) der ersten Platte (11) weist eine im Wesentlichen trapezförmige Form auf, die sich zwischen zwei parallelen Kanten erstreckt, die jeweils entlang der ersten Richtung (z) ausgerichtet sind; und
die Oberfläche der zweiten Seite (122) der zweiten Platte (12) weist eine im Wesentlichen trapezförmige Form auf, die sich zwischen zwei parallelen Kanten erstreckt, die jeweils entlang der ersten Richtung (z) ausgerichtet sind.

9. Rahmen nach einem der Ansprüche 1 bis 8,
wobei für den ersten Endträger (10a) die erste Seite der ersten Platte (11A) dazu ausgelegt sein kann, an vordefinierten externen Strukturen montiert zu werden; und/oder
wobei für den zweiten Endträger (10z) die erste Seite der zweiten Platte (12B) dazu ausgelegt sein kann, an vordefinierten externen Strukturen montiert zu werden.

10. Rahmen nach einem der Ansprüche 1 bis 9, weiter umfassend:
eine vordere Stange (92), wobei die vordere Stange (92) senkrecht zu der ersten Richtung (z) ausgerichtet und dazu konfiguriert ist, bei Betrachtung in der ersten Richtung (z) mit jedem der jeweiligen proximalen Enden des ersten Endträgers (10a), des zweiten Endträgers (10z) und jedes der Zwischenträger (10b, 10c) mechanisch verbunden zu werden; und/oder
eine hintere Stange (94), wobei die hintere Stange (94) senkrecht zu der vorgegebenen Richtung (z) ausgerichtet und dazu konfiguriert ist, bei Betrachtung in der ersten Richtung (z) mit jedem der jeweiligen distalen Enden des ersten Endträgers (10a), des zweiten Endträgers (10z) und jedes der Zwischenträger (10b, 10c) mechanisch verbunden zu werden.

11. Batteriepack (100), umfassend:
mindestens zwei Reihen gestapelter Batteriezellen (80a, 80b, 80c);
den Rahmen nach einem der Ansprüche 1 bis 10,
wobei die Anzahl der Zwischenträger (10b, 10c) gleich der um eins verringerten Anzahl der Reihen gestapelter Batteriezellen (80a, 80b, 80c) ist; und
wobei jede der Reihen gestapelter Batteriezellen (80a, 80b, 80c) zwischen einem Paar benachbarter Träger montiert ist.

12. Batteriepack nach Anspruch 11, wobei die Reihen gestapelter Batteriezellen (80a, 80b, 80c) jeweils unter Verwendung von Klebstoffschichten (81, 82) an den jeweiligen benachbarten Trägern montiert sind.

13. Fahrzeug, das eine Energiequelle verwendet, die das Batteriepack (100) nach Anspruch 11 oder 12 umfasst.

14. Verfahren zum Zusammenbauen von Trays mit gestapelten Batteriezellen zur Verwendung in einem Batteriepack (100), wobei das Verfahren die folgenden Schritte umfasst:
a1) Bereitstellen von mindestens zwei Reihen gestapelter Batteriezellen (80a, 80b, 80c);
a2) Bereitstellen einer ersten Platte und einer zweiten Platte für einen ersten Endträger (10a);
a3) Bereitstellen einer ersten Platte und einer zweiten Platte für einen zweiten Endträger (10z);
a4) Bereitstellen einer ersten Platte (11) für jeden der einen oder mehreren Zwischenträger (10b, 10c) und einer zweiten Platte (12) für jeden der einen oder mehreren Zwischenträger (10b, 10c), wobei die Anzahl der ersten Platten (11) für den einen oder die mehreren Zwischenträger (10b, 10c) gleich der Anzahl der zweiten Platten (12) für den einen oder die mehreren Zwischenträger (10b, 10c) und gleich der um eins verringerten Anzahl der Reihen gestapelter Batteriezellen (80a, 80b, 80c) ist;
wobei sowohl die erste Platte (11, 11A) als auch die zweite Platte (12, 12B) jeweils eine erste Seite (111, 121) und eine zweite Seite (112, 122) aufweisen;
wobei die erste Platte (11A) und die zweite Platte (12A) für den ersten Endträger (10a) dazu konfiguriert sind, mit ihren jeweiligen zweiten Seiten gekoppelt zu werden, um den ersten Endträger (10a) zu bilden, wobei die Kopplung jede Verlagerung der ersten Platte (11A) relativ zu der zweiten Platte (12A) mit Ausnahme eines Verschiebens der ersten Platte (11A) relativ zu der zweiten Platte (12A) in oder entgegen einer Längsrichtung (z) des ersten Endträgers (10a) verhindert;
wobei die erste Platte (11B) und die zweite Platte (12B) des zweiten Endträgers (10z) dazu konfiguriert sind, mit ihren jeweiligen zweiten Seiten gekoppelt zu werden, um den zweiten Endträger (10z) zu bilden, wobei die Kopplung jede Verlagerung der ersten Platte (11B) relativ zu der zweiten Platte (12B) mit Ausnahme eines Verschiebens der ersten Platte (11B) relativ zu der zweiten Platte (12B) in oder entgegen der Längsrichtung (z) des zweiten Endträgers (10z) verhindert;
wobei jede erste Platte (11) des einen oder der mehreren Zwischenträger (10b) dazu konfiguriert ist, mit der jeweiligen zweiten Platte (12) des einen oder der mehreren Zwischenträger (10b) gekoppelt zu werden, um den einen oder die mehreren Zwischenträger (10b) zu bilden, wobei die zweite Seite (112) der ersten Platte (11) mit der zweiten Seite (122) der zweiten Platte (12) gekoppelt wird und wobei die Kopplung jede Verlagerung der ersten Platte (11) relativ zu der zweiten Platte (12) mit Ausnahme eines Verschiebens der ersten Platte (11) relativ zu der zweiten Platte (12) in oder entgegen der Längsrichtung (z) des durch die erste Platte (11) und die zweite Platte (12) gebildeten einen oder der mehreren Zwischenträger (10b) verhindert;
wobei das Verfahren ferner die folgenden Schritte umfasst:
b) Erzeugen eines ersten Endtrays durch Montieren einer der Reihen gestapelter Batteriezellen (80a) zwischen der ersten Seite der zweiten Platte (12A) des ersten Endträgers (10a) und der ersten Seite der ersten Platte (11) eines Zwischenträgers (10b);
c) Erzeugen eines zweiten Endtrays durch Montieren einer weiteren der Reihen gestapelter Batteriezellen (80c) zwischen der ersten Seite der zweiten Platte (12) eines der nicht in Schritt b) verwendeten Zwischenträger (10c) und der ersten Seite der ersten Platte (11B) des zweiten Endträgers (10z);
d) wenn die Anzahl der Reihen gestapelter Batteriezellen größer als zwei ist:
Erzeugen eines Zwischentrays für jede der verbleibenden Reihen gestapelter Batteriezellen (80b), wobei jedes Zwischentray dadurch erzeugt wird, dass eine weitere der Reihen gestapelter Batteriezellen (80b) zwischen der ersten Seite der zweiten Platte (12) eines noch nicht an einer Reihe gestapelter Batteriezellen montierten Zwischenträgers (10b) und der ersten Seite einer ersten Platte (11) eines weiteren noch nicht an einer Reihe gestapelter Batteriezellen montierten Zwischenträgers (10c) montiert wird.

15. Verfahren zum Zusammenbauen eines Batteriepacks (100) mit einem Rahmen nach einem der Ansprüche 1 bis 9, wobei das Verfahren umfasst:
e) Erzeugen von Trays mit gestapelten Batteriezellen unter Verwendung des Verfahrens nach Anspruch 14;
f) Zusammenbauen des ersten Endträgers (10a) durch Koppeln der zweiten Seite der ersten Platte (11A) des ersten Endträgers (10a) mit der zweiten Seite der zweiten Platte (12A) des ersten Endträgers (10a);
g) Zusammenbauen des zweiten Endträgers (10z) durch Koppeln der zweiten Seite der ersten Platte (11B) des zweiten Endträgers (10z) mit der zweiten Seite der zweiten Platte (12B) des zweiten Endträgers (10z);
h) wenn die Anzahl der Reihen gestapelter Batteriezellen zwei beträgt:
Verbinden des ersten Endtrays mit dem zweiten Endtray durch Zusammenbauen des einzigen Zwischenträgers, indem die jeweiligen zweiten Seiten der ersten Platte (11) und der zweiten Platte (12) des Zwischenträgers miteinander gekoppelt werden;
i) wenn die Anzahl der Reihen gestapelter Batteriezellen (80a, 80b, 80c) größer als zwei ist:
Durchführen der folgenden Teilschritte:
i1) Verbinden des ersten Endtrays mit einem Zwischentray durch Zusammenbauen eines Zwischenträgers (10b), indem die zweite Seite (122) der ungekoppelten zweiten Platte (12) des in dem ersten Tray verwendeten Zwischenträgers (10b) mit der zweiten Seite (112) der in einem der Zwischentrays verwendeten ersten Platte (11) gekoppelt wird;
i2) wenn ein weiteres unverbundenes Zwischentray vorhanden ist: Verbinden des weiteren unverbundenen Zwischentrays durch Zusammenbauen eines Zwischenträgers, indem die zweite Seite (112) der ungekoppelten ersten Platte (11) eines in dem im vorhergehenden Schritt verbundenen Zwischentray verwendeten Zwischenträgers mit der zweiten Seite (122) der zweiten Platte (12) eines in dem weiteren Zwischentray verwendeten Zwischenträgers gekoppelt wird;
i3) Wiederholen von Schritt i2), bis kein weiteres unverbundenes Zwischentray vorhanden ist;
i4) Verbinden des zweiten Endtrays (10z) durch Zusammenbauen eines Zwischenträgers (10c), indem die zweite Seite (112) der ungekoppelten ersten Platte (11) eines in dem Zwischentray verwendeten Zwischenträgers (10c), das im vorhergehenden Teilschritt i1) oder i2) zuletzt verbunden worden ist, mit der zweiten Seite (122) der zweiten Platte (12) des in dem zweiten Endtray verwendeten Zwischenträgers (10c) gekoppelt wird.

## Revendications

1. Cadre pour fournir un support structurel pour un bloc-batterie (100) présentant au moins deux rangées de cellules de batterie empilées (80a, 80b, 80c), le cadre comportant :
une première poutre d'extrémité (10a) et une deuxième poutre d'extrémité (10z) ; et
une ou plusieurs poutres intermédiaires (10b, 10c) ;
dans lequel les une ou plusieurs poutres intermédiaires (10b, 10c) sont agencées entre la première poutre d'extrémité (10 a) et la deuxième poutre d'extrémité (10z), et chacune des poutres (10a, 10b, 10c, 10z) est orientée le long d'une première direction (z) perpendiculaire à un plan virtuel ;
dans lequel chacune des poutres (10a, 10b, 10c, 10z) comporte :
une première plaque (11) présentant un premier côté (111) et un deuxième côté (112) opposé au premier côté (111) de la première plaque (11), et
une deuxième plaque (12) présentant un premier côté (121) et un deuxième côté (122) opposé au premier côté (121) de la deuxième plaque (12), et
un moyen d'accouplement accouplant de manière coulissante le deuxième côté (112) de la première plaque (11) au deuxième côté (122) de la deuxième plaque (12) de sorte que tout déplacement de la première plaque (11) par rapport à la deuxième plaque (12) soit empêché sauf pour déplacer la première plaque (11) par rapport à la deuxième plaque (12) dans ou contre la première direction (z).

2. Cadre selon la revendication 1, dans lequel le moyen d'accouplement de chacune des poutres (10a, 10b, 10c, 10z) comporte :
un premier moyen de guidage comportant un ou plusieurs premiers rails de guidage ; et
un deuxième moyen de guidage comportant un ou plusieurs deuxièmes rails de guidage,
dans lequel chacun des premiers rails de guidage est agencé de manière fixe sur la surface du deuxième côté (112) de la première plaque (11) respective et s'étendant linéairement le long de la première direction (z) ;
dans lequel chacun des deuxièmes rails de guidage est agencé de manière fixe sur la surface du deuxième côté (122) de la deuxième plaque (12) respective et s'étendant linéairement le long de la première direction (z) ; et
dans lequel au moins l'un des premiers rails de guidage et au moins l'un des deuxièmes rails de guidage sont mis en prise l'un avec l'autre.

3. Cadre selon la revendication 2, dans lequel, pour au moins une paire d'un premier rail de guidage et d'un deuxième rail de guidage en prise :
le premier rail de guidage présente un premier profil en coupe dans n'importe quel plan perpendiculaire à la première direction (z) et croisant le premier rail de guidage, indépendamment de la position du plan par rapport à la première direction (z) ; et
le deuxième rail de guidage présente un deuxième profil en coupe dans n'importe quel plan perpendiculaire à la direction prédéfinie (z) et croisant le deuxième moyen de guidage, indépendant de la position dudit plan par rapport à la première direction (z) ;
dans lequel :
soit la forme du premier profil en coupe comporte une cavité (C) avec une ouverture (O) et le deuxième profil en coupe comporte un bossage (B) s'insérant dans la cavité (C), dans lequel le bossage (B) est relié au deuxième profil en coupe restant par une pièce de liaison traversant l'ouverture (O) de la cavité (C),
soit la forme du deuxième profil en coupe comporte une cavité (C) avec une ouverture (O) et le premier profil en coupe comporte un bossage (B) s'insérant dans la cavité (C), dans lequel le bossage (B) est relié au premier profil en coupe restant par une pièce de liaison traversant l'ouverture (O) de la cavité (C).

4. Cadre selon la revendication 2, dans lequel le moyen d'accouplement d'au moins l'une des poutres (10a, 10b, 10c, 10z) comporte au moins une paire d'un premier rail de guidage et d'un deuxième rail de guidage, dans lequel le premier rail de guidage et le deuxième rail de guidage sont mis en prise l'un avec l'autre à l'aide d'un assemblage en queue d'aronde.

5. Cadre selon l'une quelconque des revendications 1 à 4, dans lequel pour chaque poutre (10a, 10b, 10c, 10z) :
un ou plusieurs canaux de refroidissement (41) sont agencés sur la surface du deuxième côté (112) de la première plaque (11) respective ; et/ou
un ou plusieurs canaux de refroidissement (42) sont agencés sur la surface du deuxième côté (122) de la deuxième plaque (12) respective.

6. Cadre selon l'une quelconque des revendications 1 à 5,
dans lequel, pour chacune des poutres intermédiaires (10b, 10c), le premier côté (111) de la première plaque (11) respective est adapté pour fournir un support pour un côté latéral d'une rangée de cellules de batterie empilées (80a) et le premier côté (121) de la deuxième plaque (12) respective est adapté pour fournir un support pour un côté latéral d'une autre rangée de cellules de batterie empilées (80b) ;
dans lequel, pour la première poutre d'extrémité (10a), le premier côté (121) de la deuxième plaque (12) respective est adapté pour fournir un support pour un côté latéral d'une rangée de cellules de batterie empilées (80a) ; et
dans lequel, pour la deuxième poutre d'extrémité (10z), le premier côté (111) de la première plaque (11) respective est adapté pour fournir un support pour un côté latéral d'une rangée de cellules de batterie empilées (80c).

7. Cadre selon l'une quelconque des revendications 1 à 6, dans lequel le support fourni pour les côtés latéraux d'une rangée de cellules de batterie empilées par chacun des premiers côtés (111, 121) de la première plaque (11) et de la deuxième plaque (12) est réalisé par au moins une bride (6111, 6112, 6211, 6212).

8. Cadre selon l'une quelconque des revendications 1 à 7, dans lequel, pour chacune des poutres (10a, 10b, 10c, 10z) :
la surface du deuxième côté (112) de la première plaque (11) présente une forme essentiellement trapézoïdale s'étendant entre deux bords parallèles qui sont chacun orientés le long de la première direction (z) ; et
la surface du deuxième côté (122) de la deuxième plaque (12) présente une forme essentiellement trapézoïdale s'étendant entre deux bords parallèles qui sont chacun orientés le long de la première direction (z).

9. Cadre selon l'une quelconque des revendications 1 à 8,
dans lequel, pour la première poutre d'extrémité (10a), le premier côté de la première plaque (11A) peut être adapté pour être monté sur des structures externes prédéfinies ; et/ou
dans lequel, pour la deuxième poutre d'extrémité (10z), le premier côté de la deuxième plaque (12B) peut être adapté pour être monté sur des structures externes prédéfinies.

10. Cadre selon l'une quelconque des revendications 1 à 9, comportant en outre :
une barre avant (92), dans lequel la barre avant (92) est orientée perpendiculairement à la première direction (z) et configurée pour être reliée mécaniquement à chacune des extrémités proximales respectives de la première poutre d'extrémité (10a), de la deuxième poutre d'extrémité (10z) et de chacune des poutres intermédiaires (10b, 10c), lorsqu'elle est vue dans la première direction (z) ; et/ou
une barre arrière (94), dans lequel la barre arrière (94) est orientée perpendiculairement à la direction prédéfinie (z) et configurée pour être reliée mécaniquement à chacune des extrémités distales respectives de la première poutre d'extrémité (10a), de la deuxième poutre d'extrémité (10z) et de chacune des poutres intermédiaires (10b, 10c), lorsqu'elle est vue dans la première direction (z).

11. Bloc-batterie (100), comportant :
au moins deux rangées de cellules de batterie empilées (80a, 80b, 80c) ;
le cadre selon l'une quelconque des revendications 1 à 10,
dans lequel le nombre de poutres intermédiaires (10b, 10c) est égal au nombre de rangées de cellules de batterie empilées (80a, 80b, 80c) réduit d'une unité ; et
dans lequel chacune des rangées de cellules de batterie empilées (80a, 80b, 80c) est montée entre une paire de poutres adjacentes.

12. Bloc-batterie selon la revendication 11, dans lequel les rangées de cellules de batterie empilées (80a, 80b, 80c) sont chacune montées sur les poutres adjacentes respectives à l'aide de couches d'adhésifs (81, 82).

13. Véhicule utilisant une source d'alimentation comportant le bloc-batterie (100) selon les revendications 11 ou 12.

14. Procédé d'assemblage de plateaux de cellules de batterie empilées pour une utilisation dans un bloc-batterie (100), le procédé comportant les étapes suivantes :
a1) la fourniture d'au moins deux rangées de cellules de batterie empilées (80a, 80b, 80c) ;
a2) la fourniture d'une première plaque et d'une deuxième plaque pour une première poutre d'extrémité (10a) ;
a3) la fourniture d'une première plaque et d'une deuxième plaque pour une deuxième poutre d'extrémité (10z) ;
a4) la fourniture d'une première plaque (11) pour chacune des une ou plusieurs poutres intermédiaires (10b, 10c) et d'une deuxième plaque (12) pour chacune des une ou plusieurs poutres intermédiaires (10b, 10c), dans lequel le nombre de la ou des premières plaques (11) pour les une ou plusieurs poutres intermédiaires (10b, 10c) est égal au nombre de la ou des deuxièmes plaques (12) pour les une ou plusieurs poutres intermédiaires (10b, 10c) et est égal au nombre des rangées de cellules de batterie empilées (80a, 80b, 80c) réduit d'une unité ;
dans lequel chacune de la première plaque (11, 11A) et de la deuxième plaque (12, 12B) présente un premier côté (111, 121) et un deuxième côté (112, 122) ;
dans lequel la première plaque (11A) et la deuxième plaque (12A) pour la première poutre d'extrémité (10a) sont configurées pour être accouplées, avec leurs deuxièmes côtés respectifs, pour former la première poutre d'extrémité (10a), dans lequel l'accouplement empêche tout déplacement de la première plaque (11A) par rapport à la deuxième plaque (12A) sauf pour déplacer la première plaque (11A) par rapport à la deuxième plaque (12A) dans ou contre une direction allongée (z) de la première poutre d'extrémité (10a) ;
dans lequel la première plaque (11B) et la deuxième plaque (12B) de la deuxième poutre d'extrémité (10z) sont configurées pour être accouplées, avec leurs deuxièmes côtés respectifs, pour former la deuxième poutre d'extrémité (10z), dans lequel l'accouplement empêche tout déplacement de la première plaque (11B) par rapport à la deuxième plaque (12B) sauf pour déplacer la première plaque (11B) par rapport à la deuxième plaque (12B) dans ou contre la direction allongée (z) de la deuxième poutre d'extrémité (10z) ;
dans lequel la première plaque (11) de la ou des poutres intermédiaires (10b) est configurée pour être accouplée à la deuxième plaque (12) de la ou des poutres intermédiaires (10b) pour former la ou les poutres intermédiaires (10b), dans lequel le deuxième côté (112) de la première plaque (11) est accouplé au deuxième côté (122) de la deuxième plaque (12), et dans lequel l'accouplement empêche tout déplacement de la première plaque (11) par rapport à la deuxième plaque (12) sauf pour déplacer la première plaque (11) par rapport à la deuxième plaque (12) dans ou contre la direction allongée (z) de la ou des poutres intermédiaires (10b) formées par la première plaque (11) et la deuxième plaque (12) ;
le procédé comportant en outre les étapes suivantes :
b) la création d'un premier plateau d'extrémité par montage de l'une des rangées de cellules de batterie empilées (80a) entre le premier côté de la deuxième plaque (12A) de la première poutre d'extrémité (10a) et le premier côté de la première plaque (11) d'une poutre intermédiaire (10b) ;
c) la création d'un deuxième plateau d'extrémité par montage d'une autre des rangées de cellules de batterie empilées (80c) entre le premier côté de la deuxième plaque (12) de l'une des poutres intermédiaires (10c) non utilisée à l'étape b) et le premier côté de la première plaque (11B) de la deuxième poutre d'extrémité (10z) ;
d) si le nombre de rangées de cellules de batterie empilées est supérieur à deux :
la création, pour chacune des rangées restantes de cellules de batterie empilées (80b), d'un plateau intermédiaire, chacun des plateaux intermédiaires étant créé par montage d'une autre des rangées de cellules de batterie empilées (80b) entre le premier côté de la deuxième plaque (12) d'une poutre intermédiaire (10b) non encore montée sur une rangée de cellules de batterie empilées et le premier côté d'une première plaque (11) d'une autre poutre intermédiaire (10c) non encore montée sur une rangée de cellules de batterie empilées.

15. Procédé d'assemblage d'un bloc-batterie (100) avec un cadre selon l'une quelconque des revendications 1 à 9, le procédé comportant :
e) la génération de plateaux de cellules de batterie empilées à l'aide du procédé selon la revendication 14 ;
f) l'assemblage de la première poutre d'extrémité (10a) par accouplement du deuxième côté de la première plaque (11A) de la première poutre d'extrémité (10a) au deuxième côté de la deuxième plaque (12A) de la première poutre d'extrémité (10a) ;
g) l'assemblage de la deuxième poutre d'extrémité (10z) par accouplement du deuxième côté de la première plaque (11B) de la deuxième poutre d'extrémité (10z) au deuxième côté de la deuxième plaque (12B) de la deuxième poutre d'extrémité (10z) ;
h) si le nombre de rangées de cellules de batterie empilées est égal à deux :
la liaison du premier plateau d'extrémité avec le deuxième plateau d'extrémité par assemblage de l'unique poutre intermédiaire par accouplement des deuxièmes côtés respectifs de la première plaque (11) et de la deuxième plaque (12) de la poutre intermédiaire ;
i) si le nombre de rangées de cellules de batterie empilées (80a, 80b, 80c) est supérieur à deux :
la réalisation des sous-étapes suivantes :
i1) la liaison du premier plateau d'extrémité à un plateau intermédiaire par assemblage d'une poutre intermédiaire (10b) par accouplement du deuxième côté (122) de la deuxième plaque (12) non accouplée de la poutre intermédiaire (10b) utilisée dans le premier plateau au deuxième côté (112) de la première plaque (11) utilisée dans l'un des plateaux intermédiaires ;
i2) s'il y a un autre plateau intermédiaire non relié : la liaison de l'autre plateau non relié par assemblage d'une poutre intermédiaire par accouplement du deuxième côté (112) de la première plaque désaccouplée (11) d'une poutre intermédiaire utilisée dans le plateau intermédiaire relié dans l'étape précédente au deuxième côté (122) de la deuxième plaque (12) d'une poutre intermédiaire utilisée dans l'autre plateau intermédiaire ;
i3) la répétition de l'étape i2) jusqu'à ce qu'il n'y ait plus de plateau intermédiaire non relié ;
i4) la liaison du deuxième plateau d'extrémité (10z) par assemblage d'une poutre intermédiaire (10c) par accouplement du deuxième côté (112) de la première plaque désaccouplée (11) d'une poutre intermédiaire (10c) utilisée dans le plateau intermédiaire, qui a été relié en dernier dans la sous-étape i1) ou i2) précédente, au deuxième côté (122) de la deuxième plaque (12) de la poutre intermédiaire (10c) utilisée dans le deuxième plateau d'extrémité.
